# EUROPÄISCHE PATENTSCHRIFT

(11) **EP 1 633 188 B1**
(45) Veröffentlichungstag und Bekanntmachung des Hinweises auf die Patenterteilung: **05.08.2015**
(21) Anmeldenummer: 04736633.1
(22) Anmeldetag: 11.06.2004
(51) Int. Cl.: A01N 27/00, A01N 31/02, A01N 31/04, A01N 31/08, A01N 31/16, A01N 37/02, A01N 55/00, A01N 65/00, A01P 3/00

(54) **HEMMUNG DER ASEXUELLEN VON PILZEN**
INHIBITION OF THE ASEXUAL REPRODUCTION OF FUNGI
INHIBITION DE LA MULTIPLICATION ASEXUEE DES CHAMPIGNONS

(30) Priorität: 17.06.2003 DE 10327137
(43) Veröffentlichungstag der Anmeldung: 15.03.2006
(73) Patentinhaber: Henkel AG & Co. KGaA, 40589 Düsseldorf (DE)
(72) Erfinder: WEIDE, Mirko, 40233 Düsseldorf (DE); BOCKMÜHL, Dirk, 42113 Wuppertal (DE); GERKE, Thomas, 41468 Neuss (DE); BOLTE, Andreas, 40627 Düsseldorf (DE); BREVES, Roland, 40822 Mettmann (DE); DÖRING, Steve, 40591 Düsseldorf (DE)
(86) Internationale Anmeldenummer: PCT/EP2004/006292
(87) Internationale Veröffentlichungsnummer: WO 2004/110147

(56) Entgegenhaltungen:
- WO-A-98/02044
- WO-A-03/051124
- US-A- 4 477 361
- PATENT ABSTRACTS OF JAPAN Bd. 1999, Nr. 03, 31. März 1999 (1999-03-31) & JP 10 338630 A (MEIJI SEIKA KAISHA LTD; INOUE SHIGEHARU), 22. Dezember 1998 (1998-12-22)
- DATABASE WPI Section Ch, Week 200333 Derwent Publications Ltd., London, GB; Class C03, AN 2003-346560 XP002297973 & JP 2003 012411 A (KAO CORP) 15. Januar 2003 (2003-01-15)
- MORRIS J A ET AL: "ANTIMICROBIAL ACTIVITY OF AROMA CHEMICALS AND ESSENTIAL OILS" 1. Mai 1979 (1979-05-01), JOURNAL OF THE AMERICAN OIL CHEMISTS' SOCIETY, AMERICAN OIL CHEMISTS' SOCIETY. CHAMPAIGN, US, PAGE(S) 595-603 , XP000645444 ISSN: 0003-021X Tabelle 1 Seite 2, Spalte 2, Absatz 2
- DATABASE BIOSIS [Online] BIOSCIENCES INFORMATION SERVICE, PHILADELPHIA, PA, US; 1983, NAVA-RODRIGUEZ V M T ET AL: "EFFECT OF DIFFERENT CHEMICALS ON THE DEVELOPMENT OF SEVERAL MOLDS FROM STORED GRAINS" XP002297854 Database accession no. PREV198579104006 & BOLETIN DE LA SOCIEDAD MEXICANA DE MICOLOGIA, Nr. 18, 1983, Seiten 85-94, ISSN: 0085-6223
- DATABASE BIOSIS [Online] BIOSCIENCES INFORMATION SERVICE, PHILADELPHIA, PA, US; 1982, BOONCHIRD C ET AL: "IN-VITRO ANTI FUNGAL ACTIVITY OF EUGENOL AND VANILLIN AGAINST CANDIDA-ALBICANS AND CRYPTOCOCCUS-NEOFORMANS" XP002297855 Database accession no. PREV198376031974 & CANADIAN JOURNAL OF MICROBIOLOGY, Bd. 28, Nr. 11, 1982, Seiten 1235-1241, ISSN: 0008-4166
- DATABASE BIOSIS [Online] BIOSCIENCES INFORMATION SERVICE, PHILADELPHIA, PA, US; 1985, AL-KHAYAT M A ET AL: "PHENOLIC SPICE COMPONENTS SPOROSTATIC TO BACILLUS-SUBTILIS" XP002297856 Database accession no. PREV198580067051 & JOURNAL OF FOOD SCIENCE, Bd. 50, Nr. 4, 1985, Seiten 971-974, 980, ISSN: 0022-1147
- DATABASE BIOSIS [Online] BIOSCIENCES INFORMATION SERVICE, PHILADELPHIA, PA, US; 2003, ATHAWALE VILAS ET AL: "Effect of reaction parameters on synthesis of citronellyl methacrylate by lipase-catalyzed transesterification." XP002297970 Database accession no. PREV200300226998 & BIOTECHNOLOGY PROGRESS, Bd. 19, Nr. 2, April 2003 (2003-04), Seiten 298-302, ISSN: 8756-7938
- DATABASE BIOSIS [Online] BIOSCIENCES INFORMATION SERVICE, PHILADELPHIA, PA, US; 1996, TANAKA MUNEO ET AL: "2-Hydroxypropylated cyclodextrins as a sustained-release carrier for fragrance materials" XP002297971 Database accession no. PREV199698770831 & CHEMICAL AND PHARMACEUTICAL BULLETIN (TOKYO), Bd. 44, Nr. 2, 1996, Seiten 416-420, ISSN: 0009-2363
- DATABASE BIOSIS [Online] BIOSCIENCES INFORMATION SERVICE, PHILADELPHIA, PA, US; 1997, KOLLENGODE ANANTHAN N R ET AL: "Cyclodextrin complexed flavors retention in extruded starches" XP002297972 Database accession no. PREV199799813213 & JOURNAL OF FOOD SCIENCE, Bd. 62, Nr. 5, 1997, Seiten 1057-1060, ISSN: 0022-1147
- BELAICHE T ET AL: "ETUDE DE L'INFLUENCE DES TERPENES SUR LA SPORULATION D'ASPERGILLUS" INDUSTRIES ALIMENTAIRES ET AGRICOLES, PARIS, FR, Bd. 116, Nr. 6, Juni 1999 (1999-06), Seiten 27-29, XP009007965 ISSN: 0019-9311

## Beschreibung

Die Erfindung betrifft die Verwendung von Stoffen, die Terpene und/oder Duftstoffalkohole freisetzen, zur Hemmung der asexuellen Vermehrung von Pilzen sowie diese Stoffe enthaltende Filtermedien, Baustoffe, Bauhilfsstoffe, Textilien, Pelze, Papier, Felle oder Leder, aber auch Waschmittel, Reinigungsmittel, Nachspülmittel, Handwaschmittel, Handgeschirrspülmittel, Maschinengeschirrspülmittel, und Mittel zur Ausrüstung von Baustoffen, Bauhilfsstoffen, Textilien, Pelzen, Papier, Fellen oder Leder.

Pilze, insbesondere Schimmelpilze, verursachen erhebliche Probleme im Bereich der Baubiologie, da die von ihnen in die Raumluft abgegebenen Sporen häufig allergieerzeugend sind. Eine Bekämpfung solcher Pilze mit bioziden Wirkstoffen geht mit einem erhöhten Risiko der Resistenzbildung einher, so dass nach einiger Zeit neue antimikrobielle Substanzen gefunden werden müssen, die gegen diese resistent gewordenen Mikroorganismen wirken. Biozide sind außerdem ökologisch und toxikologisch nicht immer unbedenklich. Zu den unerwünschten Wirkungen der Verbreitung von Schimmelpilzen gehören insbesondere Verfärbungen (beispielsweise an Wänden, Fugendichtmassen und anderen Badoberflächen), die durch pigmentierte Sporen hervorgerufen werden.

Immer häufiger werden empfindliche Textilien, wie z. B. Seide oder Mikrofaser, zu Kleidungsstücken verarbeitet, die nur bei 30 oder 40 °C gewaschen werden können. Dadurch werden Pilze, wie beispielsweise die humanpathogene *Candida albicans,* nicht abgetötet. Insbesondere nach einer Pilzinfektion kann es durch solche auf Kleidungsstücken haftenden, nicht abgetöteten Pilze zu einer Reinfektion kommen.

Daher wurden bisher antimikrobielle Substanzen eingesetzt, die entweder das Wachstum der Pilze hemmen (Fungistatika) oder diese abtöten (Fungizide). Häufig werden dazu nicht-selektive antimikrobielle Substanzen eingesetzt, die sowohl gegen Bakterien als auch gegen Pilze wirken. Nachteilig ist daran, dass solche z. B. in Wasch- und Reinigungsmitteln verwendeten Biozide oder Biostatika die Abwässer belasten und somit auch die mikrobiellen Klärstufen in den Kläranlagen in ihrer Funktion beeinträchtigen.

JP 10 338 630 A beschreibt die Verwendung von ätherischen Ölen zur Hemmung der Sporenbildung von Pilzen, wobei die Menge an ätherischen Ölen zwischen 1 und 400 ppm liegt.

Aus JP 2003 012 411 A sind Zusammensetzungen bekannt, die 0,005 bis 5 % einer Mischung aus Riechstoffen und/oder ätherischen Ölen wie Korianderöl, Lavendelöl, Nelkenöl, Zimtöl, Rosenöl, Anisöl, Zypressenöl und Citronellöl enthalten.

Morris, J. A. et al. offenbaren in "Antimicrobial Activity of Aroma Chemicals and Essential Oils", Journal of the American Oil Chemists' Society, 1979, Seiten 595-603, eine Seife auf Basis von Patchouliöl, wobei die Menge an Patchouliöl 0,06 % beträgt.

US 4,477,361 A beschreibt antimykotisch-antibakterielle Wasch- und Reinigungsmittel auf Basis von Zimtöl.

In WO 98/02044 A1 werden Zusammensetzungen offenbart, die ätherische Öle, insbesondere Nelken-, Thymian-, Geranium- und Eukalyptusöl, in Kombination mit Tensiden und Chelatbildnern enthalten. Diese werden als Desinfektionsmittel, beispielsweise in Textilien, Papier, Fasern und Kleidung eingesetzt.

Aus "Effect of Different Chemicals on the Development of Several Molds from Stored Grains", Nava-Rodriguez V. M. T. et al., Boletin de la Sociedad Mexicana de Micologia, Nr. 18, 1983, Seiten 85-94, "In-Vitro Anti Fungal Activity of Eugenol and Vanillin Against Candida-Albicans and Cryptococcus-Neoformans", Boonchird C. et al., Canadian Journal of Microbiology, Bd. 28, Nr. 11, 1982, Seiten 1235-1241, und "Phenolic Spice Components Sporostatic to Bacillus-Subtilis", AI-Khayat M. A. et al., Journal of Food Science, Bd. 50, Nr. 4, 1985, Seiten 971-974, 980 ist bekannt, dass ätherische Öle und Terpene die asexuelle Vermehrung von Pilzen hemmen. In "Effect of Reaction Parameters on Synthesis of Citronellyl Methacrylate by Lipase-Calalyzed Transesterification", Athawale V. et al., Biotechnology Progress, Bd. 19, Nr. 2, 2003, Seiten 298-302, "2-Hydroxypropylated Cyclodextrins as a Sustained-Release Carrierfor Fragrance Materials", Tanaka Muneo et al., Chemical and Pharmaceutical Bulletin (Tokyo), Bd. 44, Nr. 2, 1996, Seiten 416-420, und "Cyclodextrin Complexed Flavors Retention in Extruded Starches", Kollengode Ananthan N. R. et al., Journal of Food Science, Bd. 62, Nr. 5, 1997, Seiten 1057-1160, ist die langsame Freisetzung bestimmter Terpene durch deren kovalente bzw. nicht-kovalente Bindung an Methacrylaten bzw. Cyclodextrinen beschrieben.

In der älteren internationalen Patentanmeldung WO 03/051124 A2 (Stand der Technik gemäß Art. 54(3) EPÜ) wird beschrieben, dass Mono-, Sesqui- und/oder Diterpene sowie deren Derivate zur Hemmung der asexuellen Vermehrung von Pilzen verwendet werden können. Als besonders bevorzugter Wirkstoff wird Farnesol genannt. Die Verwendung von Stoffen, die Terpene und/oder Duftstoffalkohole freisetzen, zur Hemmung der asexuellen Vermehrung von Pilzen wird darin nicht beschrieben.

Mono-, Sesqui- und/oder Diterpene als auch Duftstoffalkohole sind gewöhnlich Substanzen, die naturgemäß in einem gewissen Maße flüchtig sind. Daher ist bei der Verwendung der reinen Terpene bzw. Duftstoffalkohole in Produkten eine längeranhaltende Hemmwirkung auf die asexuelle Vermehrung von Pilzen nur in geringem Maße möglich, da viele der Verbindungen von Oberflächen ab- oder aus Produkten herausgewaschen werden.

Aufgabe der Erfindung ist es daher, die Nachteile des Standes der Technik zu überwinden und die asexuelle Vermehrung von Pilzen, insbesondere die Sporulation von Schimmelpilzen, insbesondere auf Oberflächen, längeranhaltend zu verhindern.

Überraschenderweise wurde gefunden, dass der Einsatz von Stoffen, die Terpene und/oder Duftstoffalkohole freisetzen, auf oder in durch Pilze befallenen Materialien die Ausbreitung der Pilze auch längerfristig zu unterbinden vermochte, ohne jedoch die Pilze abzutöten.

Gegenstand der vorliegenden Erfindung ist daher die Verwendung von Stoffen, die Terpene und/oder Duftstoffalkohole freisetzen, zur Hemmung der asexuellen Vermehrung von Pilzen, wobei die Stoffe, die Terpene und/oder Duftstoffalkohole freisetzen, ausgewählt sind aus der Gruppe gemäß Anspruch 1.

Erfindungsgemäß umfasst der Begriff asexuelle Vermehrung insbesondere Sporenbildung, Knospung und Fragmentierung.

Vorteilhafterweise werden die Pilze bei der erfindungsgemäßen Verwendung weder in ihrem Wachstum gehemmt noch abgetötet, es wird lediglich die asexuelle Vermehrung gehemmt bzw. unterdrückt. Der Selektionsdruck für die Bildung von Resistenzen ist daher gering.

Die im Vergleich zu den freien Wirkstoffen vergrößerten Moleküle ermöglichen darüber hinaus ein besseres Ausrüsten der Oberflächen, da sie besser auf diesen anhaften können.

Ein weiterer Vorteil der Erfindung ist es, dass die freigesetzten Terpene und/oder Duftstoffalkohole im Vergleich mit Fungiziden oder Fungistatika bereits in geringen Endkonzentrationen wirksam sind und daher kaum unerwünschte Nebenwirkungen befürchtet werden müssen.

Unter Freisetzung ist im Sinne der Erfindung zu verstehen, wenn die Terpene und/oder Duftstoffalkohole langsam aus den erfindungsgemäß zu verwendenden Stoffen gebildet oder freigesetzt werden. Dies kann insbesondere über ein sich einstellendes Gleichgewicht zwischen gebundener und freier Form der Terpene und/oder Duftstoffalkohole oder über Bindungsspaltung, insbesondere Hydrolyse von kovalenten Bindungen geschehen.

Unter dem Begriff "Duftstoffalkohole" werden im Rahmen der vorliegenden Erfindung Duftstoffe verstanden, die über mindestens eine oder mehrere, bevorzugt ein oder zwei Hydroxylgruppen verfügen, welche veresterbar oder verestert sind, unabhängig davon, wie das Molekül weiter aufgebaut ist. So lassen sich auch Salicylsäureester als Duftstoffalkohole einsetzen. Geeignet sind dabei alle Kombinationen von geometrischen Isomeren. Ebenfalls ist es möglich, Ester dieser Verbindungen einzusetzen, bspw. Anethol (1-Methoxy-4-(1-propenylbenzol) oder Linalylacetat.

Besonders bevorzugt werden Duftstoffalkohole mit ein oder zwei freien Hydroxylgruppen eingesetzt. Aus der großen Gruppe der Duftstoffalkohole, zu denen auch die Terpenalkohole (die im weiteren genauer beschrieben sind) gehören, lassen sich bevorzugte Vertreter mit mindestens einer freien Hydroxylgruppe nennen, so dass im Rahmen der vorliegenden Erfindung bevorzugt sind: 10-Undecen-1-ol, 2,6-Dimethylheptan-2-ol, 2-Methylbutanol, 2-Methylpentanol, 2-Phenylpropanol, 2-tert-Butycyclohexanol, 3,5,5-Trimethylcyclohexanol, 3-Hexanol, 3-Methyl-5-phenylpentanol, 3-Octanol, 3-Phenylpropanol, 4-Heptenol, 4-Isopropylcyclohexanol, 4-tert-Butycyclohexanol, 6,8-Dimethyl-2-nonanol, 6-Nonen-1-ol, 9-Decen-1-ol, alpha-Methylbenzylalkohol, 1-Hydroxy-4-(1-propenylbenzol), Amylsalicylat, Benzylalkohol, Benzylsalicylat, Butylsalicylat, Citronellole, Cyclohexylsalicylat, Decanol, Dihydromyrcenol, Dimethylbenzylcarbinol, Dimethylheptanol, Dimethyloctanol, Ethylsalicylat, Ethylvanilin, Eugenol, Heptanol, Hexylsalicylat, Isoeugenol, Isopulegol, Menthol, Myrtenol, n-Hexanol, Nerol, Nonanol, Octanol, para-Menthan-7-ol, Phenylethylalkohol, Phenylsalicylat, Tetrahydrogeraniol, Tetrahydrolinalool, Thymol, trans-2-cis-6-Nonadicnol, trans-2-Nonen-1-ol, trans-2-Octenol, Undecanol, Zimtalkohol. Bevorzugt sind beispielsweise Eugenol und dessen Derivate, 1-Hydroxy-4-(1-propenylbenzol), Isoeugenol, Citronellole, Menthol.

Unter Terpenen sind erfindungsgemäß alle aus Isopreneinheiten aufgebauten Naturstoffe und deren Derivate zu verstehen. Bevorzugt sind beispielsweise Farnesol, sowie dessen Derivat Farnesolacetat, Patchoulialkohol, Squalen, Geraniol.

Gemäß einer bevorzugten Ausführungsform der vorliegenden Erfindung werden die Stoffe, die Terpene und/oder Duftstoffalkohole freisetzen, zur Hemmung der Sporenbildung verwendet. Unter Sporenbildung ist dabei sowohl die Bildung von Vermehrungsformen z.B. Konidien, Gonitocysten, Sporangiosporen, Arthrosporen, Blastosporen und deren assoziierten Organen (z.B. Konidiophoren) als auch von Dauerformen (z.B. Chlamydosporen) zu verstehen.

Da Schimmelpilzsporen in der Raumluft ubiquitär vorhanden sind, kann ein Schimmelbefall nicht grundsätzlich verhindert werden. Die Hemmung der Sporulation der auswachsenden Pilzkolonien bietet allerdings die Möglichkeit, das Risiko einer Schimmelpilzallergie erheblich zu verringern und die Verbreitung des Pilzes vollständig aufzuhalten bzw. beträchtlich zu verzögern. Verfärbungen aufgrund von Sporenbildung werden ebenfalls stark vermindert oder vollständig verhindert.

Zudem können die erfindungsgemäß eingesetzten Stoffe den entsprechenden erfindungsgemäßen Produkten eine angenehme Duftnote verleihen und ggf. weiteren Parfümzusatz überflüssig machen kann.

Die erfindungsgemäß verwendbaren Wirkstoffe sind insbesondere zur Hemmung der asexuellen Vermehrung aller Pilze geeignet, die in den Stammlisten "DSMZ - List of Filamentous Fungi" und "DSMZ - List of Yeasts" der DSMZ (Deutsche Stammsammlung von Mikroorganismen und Zellkulturen GmbH, Braunschweig) aufgeführt sind. Die Listen sind im Internet unter der Adresse (http://www.dsmz.de/species/fungi.htm) bzw. (http://www.dsmz.de/species/yeasts.htm) einsehbar.

Bevorzugtermaßen sind die erfindungsgemäß eingesetzten Stoffe zur Hemmung der asexuellen Vermehrung von Pilzen geeignet. Dazu sind zum Beispiel die humanpathogenen Spezies der Klassen Ascomycota, Basidiomycota, Deuteromycota und Zygomycota zu zählen, insbesondere alle Spezies der Gattungen Aspergillus, Penicillium, Cladosporium und Mucor, die humanpathogenen Formen von Candida, sowie *Stachybotrys, Phoma, Alternaria, Aureobasidium, Ulocladium, E-picoccum, Stemphyllium, Paecilomyces, Trichoderma, Scopulariopsis, Wallemia, Botrytis, Verticillium und Chaetonium.*

Zu den Ascomycota gehören hier insbesondere alle Spezies der Gattungen Aspergillus, Penicillium und Cladosporium. Diese Pilze bilden Sporen aus, die bei Kontakt mit der Haut oder den Atemwegen ein stark allergieauslösendes Potential aufweisen. Zu den Basidiomycota ist beispielsweise Cryptococcus neoformans zu zählen. Zu den Deuteromycota sind alle als Schimmelpilze bekannten Gattungen zu zählen, insbesondere solche, die durch das Fehlen eines sexuellen Stadiums nicht den Klassen Ascomycota, Basidiomycota oder Zygomycota zugeordnet werden.

Die erfindungsgemäß verwendbaren Wirkstoffe sind besonders bevorzugt zur Hemmung der Sporenbildung bei allen Spezies der Gattung Aspergillus geeignet, ganz besonders bevorzugt bei Spezies, die ausgewählt sind unter *Aspergillus aculeatus, Aspergillus albus, Aspergillus alliaceus, Aspergillus asperescens, Aspergillus awamori, Aspergillus candidus, Aspergillus carbonarius, Aspergillus carneus, Aspergillus chevalieri, Aspergillus chevalieri var. intermedius, Aspergillus clavatus, Aspergillus ficuum, Aspergillus flavipes, Aspergillus flavus, Aspergillus foetidus, Aspergillus fumigatus, Aspergillus giganteus, Aspergillus humicola, Aspergillus intermedius, Aspergillus japonicus, Aspergillus nidulans, Aspergillus niger, Aspergillus niveus, Aspergillus ochraceus, Aspergillus oryzae, Aspergillus ostianus, Aspergillus parasiticus, Aspergillus parasiticus var. globosus, Aspergillus penicillioides, Aspergillus phoenicis, Aspergillus rugulosus, Aspergillus sclerotiorum, Aspergillus sojae var. gymnosardae, Aspergillus sydowi, Aspergillus tamarii, Aspergillus terreus, Aspergillus terricola, Aspergillus toxicarius, Aspergillus unguis, Aspergillus ustus, Aspergillus versicolor, Aspergillus vitricolae* und *Aspergillus wentii.*

Gemäß einer besonders bevorzugten Ausführungsform werden die Stoffe, die Terpene und/oder Duftstoffalkohole freisetzen, ganz besonders bevorzugt zur Hemmung der Sporenbildung bei Spezies der Gattung Aspergillus eingesetzt, die ausgewählt sind unter *Aspergillus flavus* und *Aspergillus nidulans.*

Erfindungsgemäß sind gemäß einer besonderen Ausführungsform unter Terpenen insbesondere die Mono-, Sesqui- und/oder Diterpene zu verstehen. Es können azyklische, monozyklische und/oder bizyklische sowie höherzyklische Mono-, Sesqui- und/oder Diterpene eingesetzt werden.

Unter den Derivaten von Monoterpenen, Sesquiterpenen bzw. Diterpenen sind beispielsweise Alkohole, Ether, Säuren sowie Ester, insbesondere Farnesol, Farnesolacetat sowie Farnesolsäure, und andere funktionelle Gruppen tragende Mono-, Sesqui- bzw. Diterpene zu verstehen. Geeignet sind dabei alle Kombinationen von geometrischen Isomeren. Ebenfalls darunter fällt α-Farnesen (3,7,11-Trimethyl-1,3,6,10-Dodekatetraen) sowie β-Farnesen (7,11-Dimethyl-3-Methylen-1,6,10-Dodekatrien) und Nerolidol (3,7,11-Trimethyl-1,6,10-Dodekatrien-3-ol) sowie Patchoulialkohol, Bisabolen, Sesquiphellandren, Zingiberen, Cadinen, Caryophyllene (insbesondere α-Caryophyllen (Humulen) und β-Caryophyllen), aryl-Tumeron, Tumeron, Xanthorrhizol, Vulgaren und β-Selinen. Als Monoterpene sind beispielsweise α- bzw. β-Ocimen, Linalool, Linalylacetat, Borneole, Isoborneole, Carene, Terpineole, p-Menthadiene, Limonen, Nerol, Nerolsäure, Geraniol, Geraniumsäure, α- bzw. β-Phellandren und/oder Thujon, insbesondere Geraniol, Linalool und/oder Thujon bevorzugt geeignet. Als Beispiel für die Diterpene sei hier Geranylgeraniol (3,7,11,15-Tetramethyl-2,6,10,14-Hexadekatetraen-1-ol) sowie seine Isomere und Derivate genannt.

Es können ebenfalls bevorzugt Pflanzenextrakte eingesetzt werden, die Duftstoffalkohole und/oder Terpene, insbesondere Mono-, Sesqui- und/oder Diterpene enthalten (beispielsweise Geraniumöl, Rosenöl, Patchouliöl, Fichtennadelöl, O-rangenöl, Orangenblütenöl, Lavendelöl, Limettenöl, Jasminöl, Pfefferminzöl, Basilikumöl, Citronellöl, Zypressenöl, Zedernblätteröl, Zedernholzöl, Korianderöl, Rosenholzöl, Thymianöl, Pimentöl, Ingweröl oder Nelkenöl, insbesondere Patchouliöl, Nelkenöl, Zypressenöl, Zedernholzöl und/oder Anisöl).

Gemäß einer bevorzugten Ausführungsform sind die freizusetzenden Mono-, Sesqui- und/oder Diterpene ausgewählt aus Geraniol, Citronellol, Farnesol und Patchoulialkohol. Diese Stoffe zeigen einen besonders gute Hemmwirkung auf die asexuelle Vermehrung von Pilzen, so dass mit geringem Wirkstoffeinsatz eine besonders gute Wirkung ohne fungistatische bzw. fungizide Effekte beobachtet werden kann.

Nach einer weiteren bevorzugten Ausführungsform sind die freizusetzenden Terpene ausgewählt aus Terpenalkoholen, also solchen Terpenen, bevorzugterweise Mono-, Sesqui- und/oder Diterpenen, die eine freie Hydroxylgruppe tragen. Besonders bevorzugt sind dabei Citronellole, Geraniol, Farnesol und Patchoulialkohol.

Gemäß einer weiteren bevorzugten Ausführungsform sind die Duftstoffalkohole ausgewählt aus Eugenol, Zimtalkohol und Anethol, insbesondere Eugenol.

Die Stoffe, die Terpene und/oder Duftstoffalkohole freisetzen, sind unter anderem ausgewählt aus Kieselsäureestern von Duftstoffalkohole und/oder Terpenen, insbesondere Terpenalkoholen.

Die Herstellung der Kieselsäureester gelingt insbesondere durch einfache Um-esterung von Kieselsäureestern (n=1) bzw. Oligokieselsäureestern (n>1) niederer Alkohole mit Duftstoff- und/oder Terpenalkoholen, wobei sowohl einzelne Duftstoff- und/oder Terpenalkohole als auch deren Gemische eingesetzt werden können. Je nach Reaktionszeit und -bedingungen werden die niederen Alkohole abgespalten und die Duftstoff- oder Terpenalkohole gebunden, wobei die Alkohole entlang der Si-O-Si-Kette leichter ausgetauscht werden als die terminalen Alkohole.

Besonders bevorzugt werden erfindungsgemäß Kieselsäureester gemäß einer der Formeln (I) oder (II) und/oder deren Mischungen eingesetzt. 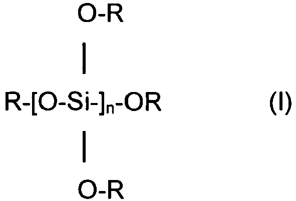 und 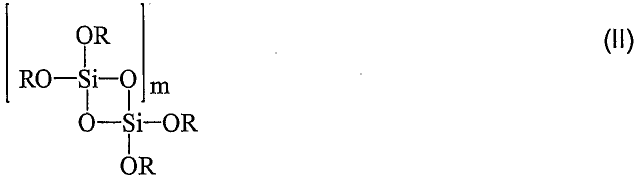 wobei mindestens ein R ausgewählt ist aus der Gruppe gebildet aus Terpenalkoholresten und Duftstoffalkoholresten, und alle anderen R unabhängig voneinander ausgewählt sind aus der Gruppe, die H, die geradkettigen oder verzweigten, gesättigten oder ungesättigten, substituierten oder unsubstituierten C₁₋₆-Kohlenwasserstoffreste, die Terpenalkoholreste, die Duftstoffalkoholreste sowie Polymere enthält, und m Werte aus dem Bereich 1 bis 20 und n Werte aus dem Bereich 1 bis 100 annimmt.

Nach einer weiteren bevorzugten Ausführungsform sind mindestens zwei oder drei Reste R ausgewählt aus der Gruppe der Terpenalkoholreste und/oder Duftstoffalkoholreste.

Die Oligomerisierungsgrade "n" der erfindungsgemäßen Kieselsäureester liegen zwischen 1 und 20. In bevorzugten Verbindungen nimmt n Werte zwischen 1 und 15, vorzugsweise zwischen 1 und 12 und insbesondere zwischen 1 und 10 unter besonderer Bevorzugung der Werte 4, 5, 6, 7 und 8, an. Besonders bevorzugte Oligokieselsäureester lassen sich also durch die Formeln III, IV, V, VI und VII beschreiben:

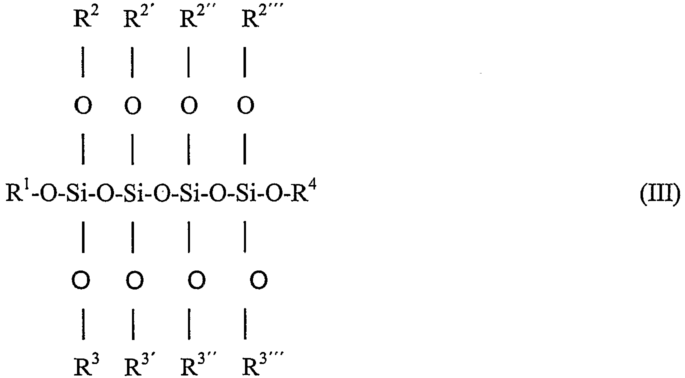

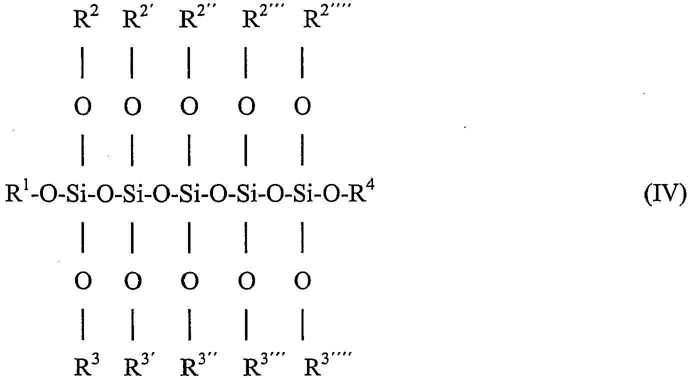

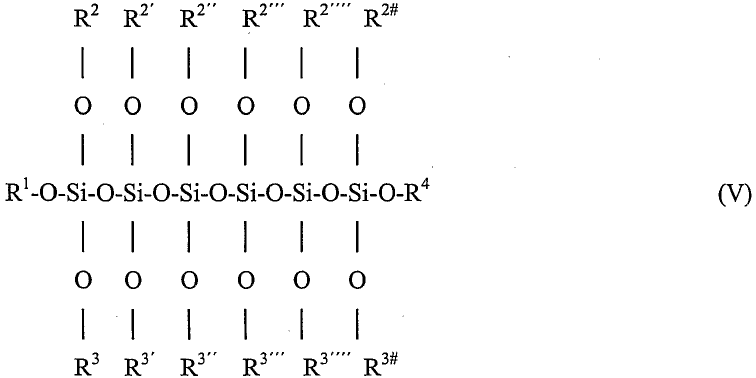

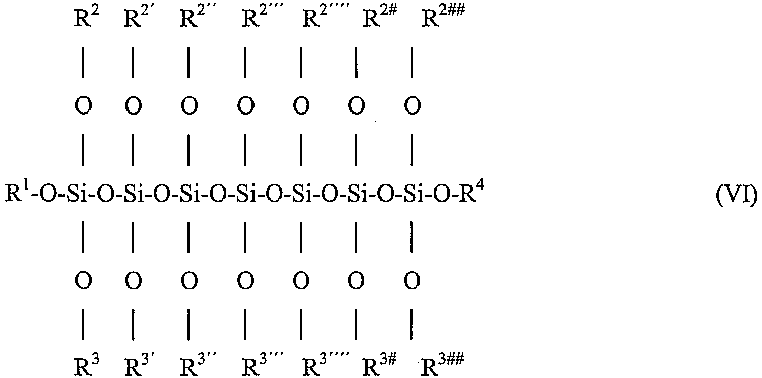

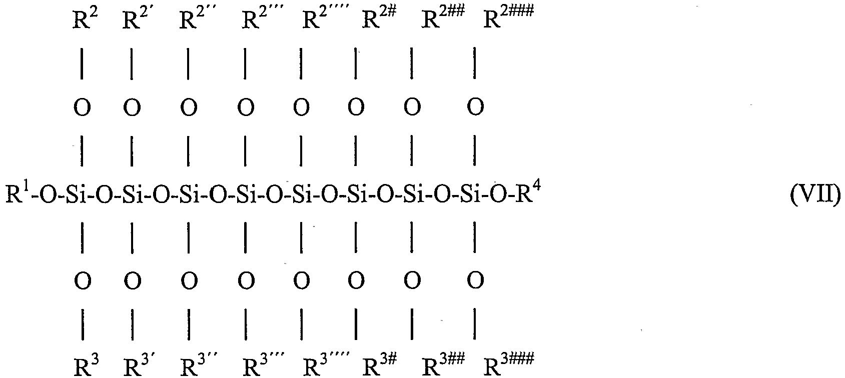

In den Formeln III bis VII können die Reste R², R^{2'}, R^{2''}, R^{2'''}, R^{2''''}, R^{2#}, R^{2##}, R^{2###} , R³, R^{3'}, R^{3''}, R^{3'''}, R^{3''''}, R^{3#}, R^{3##} und R^{3###} von jeweils ein und demselben Terpen- und/oder Duftstoffalkohol abgeleitet sein oder aus unterschiedlichen Duftstoffalkoholen stammen. Im letzteren Fall setzt man bei der Umesterung Gemische verschiedener Terpen- und/oder Duftstoffalkohole ein und erhält auf diese Weise in Abhängigkeit von den eingesetzten Mengenverhältnissen der Terpenund/oder Duftstoffalkohole gemischte Oligokieselsäureester, in denen die Reste R², R^{2'}, R^{2''}, R^{2'''}, R^{2''''}, R^{2#}, R^{2##}, R^{2###}, R³, R^{3'}, R^{3''}, R^{3'''}, R^{3''''}, R^{3#}, R^{3##} und R^{3###} voneinander unterschiedlich sein können.

Obwohl auf diese Weise die unterschiedlichsten Ester herstellbar sind, kann es im Rahmen der vorliegenden Erfindung bevorzugt sein, vollständig umgeesterte Oligokieselsäureester herzustellen, die nur auf einem einzigen Duftstoffalkohol bzw. Terpenalkohol basieren, d.h. daß die Reste R¹ bis R⁴ identisch sind, also vom gleichen Duftstoff- bzw. Terpenalkohol stammen.

Insbesondere bevorzugt sind als Duftstoff- oder Terpenalkoholreste Eugenol, Citronellole, Patchoulialkohol, Farnesol und Geraniol.

Da die Ausgangsverbindungen für die Herstellung der erfindungsgemäßen Verbindungen aus ökonomischen Gründen vorzugsweise keine Reinstoffe sind, sondern technische Gemische von Kieselsäuren bzw. Kieselsäureestern niederer AIkohole mit unterschiedlichen Oligomerisierungsgraden, findet sich die Verteilung der Oligomerisierungsgrade auch in den erfindungsgemäßen Estern wieder. Es können entsprechend auch Gemische der Duftstoff- und/oder Terpenalkohole, z.B. auch die entsprechenden Pflanzenextrakte und/oder Duftöle, wie bereits beschrieben, eingesetzt werden. Die in den Formeln III bis VII angegebenen Verbindungen stellen dabei einzelne Spezies dar, die in technischen Gemischen der erfindungsgemäßen Kieselsäureester bevorzugt in hohen Mengen vorkommen. Erfindungsgemäß einsetzbar sind aber auch die Gemische der genannten Verbindungen und damit gebrochene Oligomerisierungsgrade.

Die erfindungsgemäß verwendeten Kieselsäureester zeichnen sich durch eine gute Hydrolysestabilität aus und können auch in wäßrigen Medien bzw. in Herstellprozessen für Granulate, Dichtungsmassen, etc. eingesetzt werden, ohne dabei übermäßige Aktivitätsverluste zu erleiden. Die Freisetzung von Terpenen und/oder Duftstoffalkoholen aus den erfindungsgemäßen Stoffen erfolgt dadurch langsam und in vergleichsweise geringen Mengen, so dass über einen längeren Zeitraum kontinuierlich eine nicht fungizide bzw. fungistatische Konzentration der Terpene und/oder Duftstoffalkohole aus den Produkten freigesetzt wird.

Gemäß einer weiteren Ausführungsform sind die C₁₋₆-Kohlenwasserstoffreste unabhängig voneinander ausgewählt aus der Gruppe Methyl, Ethyl, *n*-Propyl, *iso*Propyl, *n*-Butyl, *iso*-Butyl und *tert*-Butyl.

Nach einer besonders bevorzugten Ausführungsform können sich ein oder mehrere Polymerreste an den Kieselsäureestern befinden. Bevorzugt werden solche Polymere zur Herstellung der Kieselsäureester eingesetzt, die freie Hydroxylgruppen enthalten. Insbesondere sind der oder die Polymerrest(e) ausgewählt aus Stärke und/oder dessen Derivaten, Cellulose und/oder dessen Derivaten, Polyvinylalkohol, Polyolen, Hydroxypolydimethylsiloxanen (ganz besonders α,ω-Dihydroxypolydimethylsiloxane) und Polyphenolen, insbesondere Polyvinylalkohol. Insbesondere ist es bevorzugt, wenn sich ein Polymerrest an den Duftstoff- und/oder Terpenalkohol tragenden Kieselsäureestern befindet. Für die Verwendung in Dichtungsmassen ist es besonders bevorzugt eher kurzkettige Polymere einzusetzen.

Diese spezielle Ausführungsform hat den Vorteil, dass man die Kieselsäureester je nach Anwendungsgebiet individuell auf den Anwendungszweck bzw. die -gegebenheiten anpassen kann. Beispielsweise sind solche Polymere besonders geeignet, die Einarbeitbarkeit der Stoffe zu verbessern, die Haftung, insbesondere an Oberflächen, zu erhöhen und die Freisetzungseigenschaften der Terpene und/oder Duftstoffalkohole gewünschtermaßen zu beeinflussen.

Die Stoffe, die Terpene und/oder Duftstoffalkohole freisetzen, können erfindungsgemäß weiterhin ausgewählt sein aus Estern von Terpenalkoholen und/oder Duftstoffalkoholen mit Polymeren. Auch für diese Stoffe ergeben sich bessere Anpassbarkeit an den Anwendungszweck, beispielsweise ein besseres Aufziehen oder Anhaften an Oberflächen oder günstigere Bedingungen für die Einarbeitbarkeit. Die Hydrolyse dieser Esterbindung, z. B. bei sich wiederholendem Kontakt mit Wasser setzt langsam die Wirkstoffe frei, die dann die asexuellen Vermehrung von Pilzen hemmen können.

Besonders bevorzugt werden solche Stoffe durch Reaktion der Terpenalkohole und/oder Duftstoffalkohol mit solchen Polymere durchgeführt, die funktionelle Gruppen tragen, die insbesondere ausgewählt sind aus Säuregruppen, Säurechloridgruppen, Estergruppen, primären, sekundären und tertiären Amidgruppen.

Bevorzugterweise werden als Polymere erfindungsgemäß Polyacrylsäure, Polyacrylsäureester, Polymethacrylsäure, Polymethacrylsäureester, Polycarbonsäuren, (insbesondere Carboxymethylcellulose) sowie Copolymere aus den zugrundeliegenden Monomer (auch mit anderen als den genannten Monomeren) und primäre, sekundäre oder tertiäre Polyacrylamide eingesetzt. Insbesondere sind dabei Kettenlängen von ca. 2000 bis 300000 g/mol bevorzugt.

Die Stoffe, die Terpene und/oder Duftstoffalkohole freisetzen, können erfindungsgemäß weiterhin ausgewählt sein aus Polymeren, die durch Umsetzung von Terpenalkoholen und/oder Duftstoffalkoholen mit Monomeren oder Polymeren, die ein oder mehrere Isocyanatgruppen tragen, entstehen. Die sich durch die Reaktion von einer Alkoholfunktion mit einer Isocyanatgruppe ergebenen Urethane hydrolysieren ebenfalls langsam und geben die Wirkstoff kontrolliert frei.

Bevorzugt ist der Einsatz von monomeren aliphatischen oder aromatischen Mono-, Di- und/oder Triisocyanaten mit Terpen- und/oder Duftstoffalkoholen. Die daraus entstehenden Urethane bzw. Polyurethane (bei Verwendung von Isocyanaten mit mehreren Isocyanatgruppen) können ebenfalls hydrolysieren und die Wirkstoffe langsam freisetzen.

Als Monoisocyanate sind beispielsweie die linearen oder verzweiten aliphatischen Monoisocyanate mit 6 bis 44 C-Atomen, beispielsweise Hexylisocyanat, Heptylisocyanat, Octylisocyanat, Nonylisocyanat, Decylisocyanat, Undecylisocyanat, Dodecylisocyanat, Tridecylisocyanat, Quaterdecylisocyanat, Pentadecylisocyanat, Hexadecylisocyanat, Heptadecylisocyanat, Octadecylisocyanat und die entsprechenden höheren Homologe dieser Reihe bevorzugt. Ebenfalls bevorzugt sind aromatische Monoisocyanate wie Phenylisocyanat, Benzylisocyanat oder Biphenylisocyanat.

Als Diisocyanate (Q(NCO)₂) sind insbesondere solche bevorzugt, bei denen Q ausgewählt ist aus einem aliphatischen, ggf. substituierten Kohlenwasserstoffrest mit 4 bis etwa 15 Kohlenstoffatomen, einem aromatischen, ggf. substituierten Kohlenwasserstoffrest mit 6 bis etwa 15 Kohlenstoffatomen oder einen ggf. substituierten araliphatischen Kohlenwasserstoffrest mit 7 bis etwa 15 Kohlenstoffatomen. Beispielsweise genannt seien hier Tetramethylendiisocyanat, Hexamethylendiisocyanat, Dodecamethylendiisocyanat, Dimerfettsäurediisocyanat, 1,4-Diisocyanato-cyclohexan, 1-Isocyanato-3,3,5-trimethyl-5-isocyanato-methylcyclohexan (IDPI), 4,4'-Diisocyanato-dicyclohexylmethyl, 4,4'-Diisocyanatodicyclohexylpropan-2,2, 1,3- und 1,4-Diisocyanatobenzol, 2,4- oder 2,6-Diisocyanatotoluol oder deren Gemische, 2,2'-, 2,4 oder 4,4'-Diisocyanato-diphenylmethan, Tetramethylxylylendiisocyanat, p-Xylylendiisocyanat sowie aus diesen Verbindungen bestehende Gemische.

Besonders bevorzugt sind Toluendiisocyanat, Hexamethylendiisocyanat und meta-Tetramethylxylylendiisocyanat.

Als Triisocyanate kommen dabei hauptsächlich aromatische Triisocyanate in Frage wie zum Beispiel der Thiophosphorsäure-tris-(p-Isocyanato-Phenylester), das Triphenylmethan-4,4',4"-Triisocyanat sowie insbesondere die verschiedenen isomeren trifunktionellen Homologen des Diphenylmethandiisocyanats (MDI).

Weiterhin sind als Triisocyanate auch Addukte aus Diiso-cyanaten und niedermolekularen Triolen geeignet, insbesondere die Addukte aus aromatischen Diisocyanten und Triolen wie zum Beispiel Trimethylolpropan oder Glycerin. Auch bei diesen Addukten gelten die oben genannten Einschränkungen bezüglich des Diisocyanatgehaltes sowie des Gehaltes an Polyisocyanaten mit einer Funktionalität >3.

Auch aliphatische Triisocyanate wie zum Beispiel das Biuretisierungsprodukt des Hexamethylendiisocyanates (HDI) oder das Isocyanuratisierungsprodukt des HDI oder auch die gleichen Trimerisierungsprodukte des Isophorondiisocyanats (IPDI) sind für die erfindungsgemäßen Zusammensetzungen geeignet.

Polyisocyanate sind die Dimerisierungs- oder Trimerisierungsprodukte der bereits als bevorzugt genannten Diisocyanate. Beispiele für geeignete Isocyanate sind die Dimerisierungs- oder Trimerisierungsprodukte der Diisocyanate 2,4-Toluylendiisocyanat (2,4-TDI), 2,6-Toluylendiisocyanat (2,6-TDI), oder ein Gemisch der genannten Isomeren, 2,2'-Diphenylmethandiisocyanat (2,2'-MDI), 2,4'-Diphenylmethandiisocyanat (2,4'-MDI), 4,4'-Diphenylmethandiisocyanat (4,4'-MDI), 1,5-Naphthylendiisocyanat (NDI), 1,4-Phenylendiisocyanat, 1,3-Tetramethylxylylendiisocyanat (TMXDI), hydriertes MDI (HMDI), Isophorondiisocyanat (IPDI), Hexamethylendiisocyanat-1,6 (HDI), 2-Isocyanatopropylcyclohexylisocyanat (IPCI), 2-Butyl-2-ethyl-pentamethylendiisocyanat (BEPDI), Lysindiisocyanat (LDI), 1,12-Dodecyldiisocyanat, Cyclohexyl-1,3- oder-1,4-diisocyanat, 2-Methylpentamethylendiisocyanat (MPDI) oder dergleichen, beispielsweise enthaltend Urethan-, Allophanat-, Harnstoff-, Biuret-, Uretidon-, Carbidiimid- oder Ketonimingruppen wie sie durch Dimerisierung oder Trimerisierung der oben genannten Diisocyanate entstehen. Besonders geeignet sind oligomere oder polymere Isocyanatgruppen tragende Verbindungen, wie sie beispielsweise bei der Isocyanatherstellung anfallen oder als Restprodukte bei der Destillierung von Isocyanatrohprodukten im Destillationssumpf verbleiben. Beispiele für in diesem Zusammenhang besonders geeignete Materialien sind Roh-MDI, wie es direkt nach der Herstellung von MDI erhältlich ist, und Polymer-MDI, wie es nach der Destillation von MDI aus dem Roh-MDI im Destillationssumpf verbleibt.

Es ist bevorzugt, eine entsprechende Menge an Terpen- und/oder Duftstoffalkohol zu den Monomeren hinzuzugeben und so entsprechende Monomere zu erzeugen. So können Stoffe erzeugt werden, die je nach verwendeten Monomeren (Monoisocyanate, Diisocyanate, Triisocyanate oder Polyisocyanate) ein oder mehrere, insbesondere ein, zwei oder drei Terpen- und/oder Duftstoffalkoholreste tragen. Es ist dabei auch möglich, über eine Polymerisationsreaktion eine Polymerkette mit endständigen Terpen- und/oder Duftstoffalkoholresten zu erzeugen.

Solche Monomere bzw. Polymere können beispielsweise in Dichtungsmassen direkt in der Kartusche oder in einem separaten Kompartiment als Additive eingesetzt werden. Ebenfalls können auch bei der Produktion der Dichtungsmassen, insbesondere bei solchen auf Urethanbasis, die entsprechenden Terpen- und/oder Dufstoffalkohole direkt zu den Monomeren der Dichtungsmassen zugegeben werden. Der Einsatz der Reaktionsprodukte aus Mono-, Di- und/oder Triisocyanaten mit Terpen- und/oder Duftstoffalkoholen in Dichtungsmassen ist besonders bevorzugt.

Als Kettenverlängerungsmittel, die im Rahmen einer Polymerisationsreaktion zur Herstellung der erfindungsgemäß zu verwendenden Stoffe zusätzlich eingesetzt werden können, eignen sich beispielsweise mehrwertige Alkohole wie Ethylenglykol, Propylenglykol, Propandiol-1,3, Butandiol-1,4, Hexandiol-1,6, Trimethylolpropan, Glyzerin, Pentaerythrit, Sorbit, Mannit oder Glucose. Auch niedermolekulare Polyesterdiole wie Bernsteinsäure-, Glutarsäure- oder Adipinsäure-bis-(hydroxyethyl)-ester, oder ein Gemisch aus zwei oder mehr davon, oder niedermolekulare, Ethergruppen aufweisende Diole, wie Diethylenglykol, Triethylenglykol, Tetraethylenglykol, Dipropylenglykol, Tripropylenglykol oder Tetrapropylenglykol können mit verwendet werden. Ebenfalls geeignet sind Amine wie Ethylendiamin, Hexamethylendiamin, Piperazin, 2,5-Dimethylpiperazin, 1-Amino-3-aminomethyl-3,5,5-trimethylcyclohexan (Isophorondiamin, IPDA), 4,4'-Diamino-dicyclohexylmethan, 1,4-Diaminocyclohexan, 1,2-Diaminopropan, Hydrazin, Hydrazinhydrat, Aminosäurehydrazide wie 2-Aminoessigsäurehydrazid oder Bis-hydrazide wie Bernsteinsäurebishydrazid. Die Mitverwendung von im Sinne einer Isocyanat-Polyadditionsreaktion tri- oder höherfunktionellen Verbindungen in geringen Anteilen ist zur Erzielung eines gewissen Verzweigungsgrades ebenso möglich wie die bereits erwähnte mögliche Mitverwendung von tri- oder höherfunktionellen Polyisocyanaten zum gleichen Zweck. Einwertige Alkohole wie n-Butanol oder n-Dodecanol und Stearylalkohol können in geringen Mengen mitverwendet werden.

Die Stoffe, die Terpene und/oder Duftstoffalkohole freisetzen, können erfindungsgemäß weiterhin ausgewählt sein aus Käfigmolekülen, die mit Terpenen und/oder Duftstoffalkoholen beladen sind, wobei es sich bei den Käfigmolekülen um Calixarene handelt.

Unter Käfigmolekülen sind im erfindungsgemäßen Zusammenhang insbesondere solche organischen makrocyclischen Moleküle zu verstehen, die eine käfigartige, räumliche Struktur aufweisen und in der Lage sind, als sogenannte Wirtsmoleküle ein oder mehrere sogenannte Gastmoleküle einzuschließen. Bevorzugt wird jeweils nur ein Gastmolekül eingeschlossen.

Die gezielte, langsame Freisetzung von den zu Hemmung der asexuellen Vermehrung von Pilzen geeigneten Terpenen und/oder Duftstoffalkoholen, kann auch über Gleichgewichtseinstellung aus einer (häufig nicht kovalenten) Bindung oder durch Komplexierung eines Terpens und/oder Duftstoffalkohols aus einem Käfigmolekül stattfinden.

Die Einarbeitbarkeit dieser Verbindungen in die erfindungsgemäßen Produkte, insbesondere in solche mit hydrophoberem Charakter ist aufgrund der eher hydrophoben Aussenhülle der Käfigsubstanzen besonders gut.

Ein besonderes großer Vorteil der Verwendung von Käfigmolekülen ist, dass es möglich ist, die herausdiffundierenden Terpene und/oder Duftstoffalkohole nach einer längeren Zeit in den Produkten wieder aufzuladen.

Insbesondere ist der Einsatz in Fugendichtmassen geeignet, da dort entweder durch entsprechende Mittel und auch durch Reinigungsmittel, die die freien Terpene und/oder Duftstoffalkohole vor allem wegen des Dufts enthalten dazu dienen können, ohne besondere Umstände die entsprechenden Käfigmoleküle wieder mit freien Terpenen und/oder Duftstoffalkoholen zu beladen. Insbesondere sind dabei auch konzentrierte Lösungen der genannten Wirkstoffe oder auch die Pflanzenöle und -extrakte, die diese Wirkstoffe enthalten geeignet, die entsprechenden Beladung wieder herzustellen. Daher kann es auch bevorzugt sein, Produkte herzustellen, die nicht von vornherein die freien Wirkstoffe komplexiert bzw. gebunden in den Käfigmolekülen enthalten, sondern erst in der Anwendungssituation durch diese beladen werden. Formulierungstechnisch ist das für dem Fachmann bekannte Einsatzgebiete sinnvoll.

Es können Calix[n]arene gemäß Formel (VIII) eingesetzt werden. 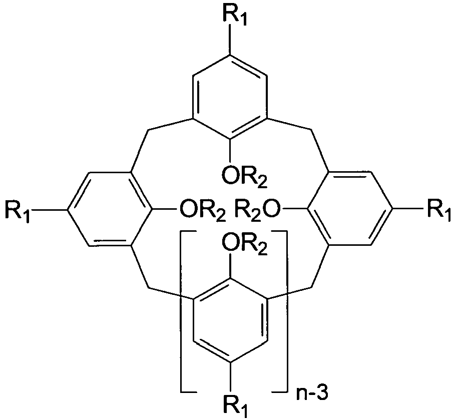 wobei
R₁ ausgewählt ist aus R₁ = H, Alkyl, Aryl, Alkenyl, Alkinyl sowie substituierten Alkylen, Arylen, Alkenylen, Alkinylen, die Gruppen tragen, die aus-OH, -OR', -NH₂, -NHR', -NR'R", NR'R''R'''⁺ ,NO₂, Halogen, SO₃H, SO₃M (M = Alkalimetalle, Erdalkalimetalle), Carbonsäuren, Ketonen, Aldehyden, Amiden, Estern, -SO₂NH₂, -SO₂NHR, -SO₂NR'R", -SO₂Halogen, schwefel-, phosphor-, siliziumhaltigen Gruppen.
und
R₂ ausgewählt ist aus R₂ = H, Alkyl, Aryl, Alkenyl, Alkinyl, sowie substituierten Alkylen, Arylen, Alkenylen, Alkinylen , die Gruppen tragen, die ausgewählt sind aus - OH, -OR', -NH₂, -NHR', -NR'R", -NR'R''R'''⁺, -NO₂, Halogen, -SO₃H, -SO₃M (M = Alkalimetalle, Erdalkalimetalle), Carbonsäuren, Ketonen, Aldehyden, Amiden, Estern, -SO₂NH₂, -SO₂NHR', -SO₂NR'R", -SO₂Halogen, schwefel-, phosphor-, oder siliziumhaltigen Gruppen,
wobei R', R'', R''' unabhängig von einander ausgewählt sind aus H, Alkyl, Aryl, Alkenyl, Alkinyl, substituierten Alkyle, Aryle, Alkenyle, Alkinyle

Bevorzugt sind dabei Calixarene gemäß Formel (VIII) für die gilt:
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus - OH, -OR', -NH₂, -NHR', -NR'R", NR'R''R'''⁺ ,NO₂, Halogen, SO₃H, Carbonsäuren, Ketonen, Aldehyden, Amiden, Estern, -SO₂NR'R".
und
R₂ ausgewählt ist aus R₂ = H, Alkyl, Aryl, Alkenyl, Alkinyl, sowie substituierten Alkylen, Arylen, Alkenylen, Alkinylen , die Gruppen tragen, die ausgewählt sind aus - OH, -OR', -NH₂, -NR'R", -NR'R''R'''⁺, -NO₂, Halogen, -SO₃H, Carbonsäuren, Ketonen, Aldehyden, Amiden, Estern, -SO₂NR'R".
wobei R', R", R''' unabhängig von einander ausgewählt sind aus H, Alkyl, Aryl, Alkenyl, Alkinyl sowie substituierten Alkylen, Arylen, Alkenylen, Alkinylen.

Im Sinne der vorliegenden Erfindung bevorzugt sind Calix[n]arene der Ringgröße n= 4 bis 12, sowie deren Gemische, wobei Calix[6]- und/oder Calix[4]arene sowie Mischungen mit einem überwiegenden Anteil an Calix[6]- und/oder Calix[4]arene besonders bevorzugt sind.

R₂,R₃ unabhängig von einander ausgewählt sind aus R₂, R₃= H, Alkyl, Aryl, Alkenyl, Alkinyl, sowie substituierten Alkylen, Arylen, Alkenylen, Alkinylen, die Gruppen tragen, die ausgewählt sind aus -OH, -OR, -NH₂, -NHR, NR'R", NR'R''R'''⁺,-NO₂, Halogen, -SO₃H, -SO₃M (M = Alkalimetalle, Erdalkalimetalle), Carbonsäuren, Ketonen, Aldehyden, Amiden, Estern, -SO₂NH₂, -SO₂NHR, -SO₂NR₂, - SO₂Halogen, schwefel-, phosphor-, siliziumhaltige Gruppen,
und wobei R', R'', R''' unabhängig von einander ausgewählt sind aus H, Alkyl, Aryl, Alkenyl, Alkinyl sowie substituierten Alkylen, Arylen, Alkenylen, Alkinylen.

Bevorzugt sind Calix[4]resorcarene und/oder Calix[6]resorcarene gemäß Formel (IX), für die gilt, dass
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus - OH, -OR', -NH₂, -NHR', -NR'R", NR'R''R'''⁺ ,NO₂, Halogen, SO₃H, Carbonsäuren, Ketonen, Aldehyden, Amiden, Estern, -SO₂NR'R".
und
R₂,R₃ unabhängig von einander ausgewählt sind aus R₂, R₃= H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NR'R", -NR'R''R'''⁺,-NO₂, Halogen, -SO₃H, Carbonsäuren, Ketonen, Aldehyden, Amiden, Estern, - SO₂NR'R".
wobei R', R", R''' unabhängig von einander ausgewählt sind aus H, Alkyl, Aryl, Alkenyl, Alkinyl sowie substituierten Alkylen, Arylen, Alkenylen, Alkinylen.

Insbesondere ist es bevorzugt, wenn R₂ = R₃ ist, d.h. R₂ und R₃ die gleichen Substitutenten darstellen.

Besonders bevorzugt werden als Gastmoleküle mit den genannten Calixarenen Eugenol, Farnesol, Geraniol, Patchoulialkohol und Anethol bzw. die diese Stoffe enthaltenden Pflanzenextrakte (inbesondere Öle, beispielsweise Patchouli-, Anisoder Nelkenöl) als Terpene und/oder Duftalkohole eingesetzt.

Gemäß einer besonderen Ausführungsform werden die Stoffe, die Terpene und/oder Duftstoffalkohole freisetzen, in solchen Konzentrationen eingesetzt, dass die Endkonzentration der freigesetzten Komponenten nicht fungizid (pilzabtötend) oder fungistatisch (pilzwachstumshemmend) wirken. Ein besonderer Vorteil dieser Ausführungsform ist es, dass das Risiko einer Resistenzbildung gegenüber den verwendeten Stoffen relativ gering ist, da die Pilze weder abgetötet noch ihr Wachstum gehemmt werden. Diese minimalen Hemmkonzentrationen können in dem Fachmann bekannter Weise einfach bestimmt werden.

Gemäß einer weiteren Ausführungsform sind Stoffe, die Terpene und/oder Duftstoffalkohole freisetzen, zu 0,000001 bis 50 Gew.-% enthalten. Ein besonderer Vorteil dieser Ausführungsform ist es, dass nur geringe Konzentrationen der Wirkstoffe freigesetzt sein müssen, damit die asexuelle Fortpflanzung der Pilze vermindert bzw. im wesentlichen ganz verhindert wird. Bevorzugt sind die zu 0,00001 bis 10 Gew.-% und insbesondere zu 0,0001 bis 5 Gew.-% enthalten. Besonders bevorzugt sind Bereiche zwischen 0,001 und 1 Gew.-%.

Die Konzentrationen, die im Endprodukt zum gewünschten Ergebnis führen, sind bedeutend geringer als die angegebenen, da für viele Produkte Verdünnungen berücksichtigt werden müssen. Für Waschmittel muss beispielsweise mit einem Verdünnungsfaktor (Verhältnis Waschmittelkonzentrat : Wasser) von 1:20 bis zu 1:200 gerechnet werden. Häufig liegt das Verdünnungsverhältnis für Waschmittel zwischen 1:60 und 1:100, beispielsweise 1:80. In der fertigen Anwendungslösung zeigen insbesondere Konzentrationen von 0,0001 bis 5 Gew.-% eine besonders gute sporulationshemmende Wirkung. Bevorzugt werden 0,001 bis 2 Gew.-%, beispielsweise 0,1 Gew.-%, eingesetzt.

Für Farnesolkieselsäureester wären beispielsweise Konzentrationen von 0,001 bis 5,0 Gew.-%, insbesondere von 0,01 bis 2 Gew.-% geeignet.

Die Ausrüstung von Oberflächen erfolgt insbesondere durch das Inkontaktbringen mit den erfindungsgemäß zu verwendenden Stoffen durch Auftragen oder Aufsprühen. Ebenfalls ist es möglich, die erfindungsgemäß zu verwendenden Stoffe in der Weise einzusetzen, dass die Wirkstoffe (freien Duftstoffalkohole und/oder Terpene) zur Hemmung der asexuellen Vermehrung von Pilzen langsam freigesetzt werden und sich, insbesondere in Räumen, die einen vergleichsweise geringen Rauminhalt haben und vorwiegend geschlossen sind (z.B. Kühlschrankinnenraum, Maschinengeschirrspülerinnenraum, kleine Nasszellen etc.), auf den Oberflächen abscheiden und dort ihre, insbesondere sporulationshemmende Wirkung entfalten. Beispielsweise können Raumluftverbesserer, Raumluftbefeuchter sowie Deos für solche Räumlichkeiten mit den Stoffen, die Terpene und/oder Duftstoffalkohole freisetzen, ausgerüstet werden, wodurch der langsam freigesetzte Wirkstoff verdunstet, sich dann auf den Oberflächen niederschlägt und so die asexuelle Vermehrung von Pilzen hemmt.

Weitere Gegenstände der vorliegenden Erfindung sind Waschmittel, Reinigungsmittel, Nachspülmittel, Handwaschmittel, Handgeschirrspülmitteln, Maschinengeschirrspülmittel, und Mittel zur Ausrüstung von Filtermedien, Baustoffen, Bauhilfsstoffen, Textilien, Pelzen, Papier, Fellen oder Leder, enthaltend Stoffe, die Terpene und/oder Duftstoffalkohole freisetzen, zur Hemmung der asexuellen Vermehrung, wobei die Stoffe aus der in Anspruch 21 genannten Gruppe ausgewählt sind.

Weitere Gegenstände der vorliegenden Erfindung sind Filtermedien, Baustoffe, Bauhilfsstoffe, Textilien, Pelze, Papier, Felle oder Leder, die genannten Stoffe, die Terpene und/oder Duftstoffalkohole freisetzen, enthalten und/oder mit einem erfindungsgemäßen Mittel ausgerüstet wurden.

Die Ausrüstung des Papiers, der Textilien, von Wandbehangsstoffen, Pelzen, Fellen oder Leder erfolgt in dem Fachmann bekannter Weise, beispielsweise durch Eintauchen des Papiers oder der Textilien, Pelze, Felle oder Leder in eine geeignet konzentrierte Lösung eines erfindungsgemäßen Mittels.

Die Ausrüstung der Filtermedien, Baustoffe oder Bauhilfsstoffe erfolgt beispielsweise durch mechanisches Einarbeiten oder Aufbringen einer geeignet konzentrierten Lösung eines erfindungsgemäßen Mittels in bzw. auf die Filtermedien, Baustoffe oder Bauhilfsstoffe.

Vorzugsweise sind die erfindungsgemäß ausgerüsteten Baustoffe oder Bauhilfsstoffe ausgewählt unter Klebe-, Dichtungs-, Spachtel- und Anstrichmassen, Kunststoffen, Lacken, Farben, Putz, Mörtel, Estrich, Beton, Isoliermaterialien sowie Grundierungen. Besonders bevorzugte Baustoffe oder Bauhilfsstoffe sind Fugendichtmassen (bspw. silikonhaltige Fugendichtmassen),Tapetenkleister, Putz, Teppichfixierer, Silikonkleber, Dispersionsfarben, Anstrichmassen für den Innen- und/oder Außenbereich und Fliesenkleber.

Dichtungsmassen und insbesondere Fugendichtungsmassen enthalten typischerweise organische Polymere sowie in vielen Fällen mineralische oder organische Füllstoffe und sonstige Additive.

Geeignete Polymere sind beispielsweise thermoplastische Elastomere, wie in der DE-A-3602526 der Anmelderin beschrieben, vorzugsweise Polyurethane und Acrylate. Geeignete Polymere sind auch in den Offenlegungsschriften DE-A-3726547, DE-A-4029504 und DE-A-4009095 der Anmelderin sowie in DE-A-19704553 und DE-A-4233077 genannt.

Die erfindungsgemäßen Dichtmassen (Dichtstoffe bzw. Dichtstoffmischungen) enthalten bevorzugt 0,0001 - 5 Gew.-% an erfindungsgemäß zu verwendende Stoffen, die Terpene und/oder Duftstoffalkohole freisetzen. Besonders bevorzugt sind Bereiche zwischen 0,001 und 1,0 Gew.-%.

Erfindungsgemäß kann die Ausrüstung der erfindungsgemäßen Dichtstoffe sowohl im ungehärteten oder bei unter 60 °C gehärteten Zustand erfolgen. Dichtstoffe sind im erfindungsgemäßen Zusammenhang Materialien gemäß DIN EN 26927, insbesondere solche, die plastisch oder elastisch als Dichtstoffe aushärten. Die erfindungsgemäßen Dichtstoffe können alle für die entsprechenden Dichtmassen typischen Zusatzstoffe, wie z.B. typische Verdickungsmittel, verstärkende Füllstoffe, Vernetzer, Vernetzungskatalysatoren, Pigmente, Haftmittel oder sonstige Volumenextender enthalten. Dichtstoffe enthaltend die erfindungsgemäß zu verwendenden Stoffe, die Terpene und/oder Duftstoffalkohole freisetzen, können durch Eindispergieren in dem Fachmann bekannter Weise z.B. durch die Verwendung von Dispergiereinrichtungen, Kneter, Planetenmischer usw., unter Ausschluß von Feuchtigkeit und Sauerstoff sowohl in die fertige als auch in Teile dieser Dichtmassen bzw. zusammen mit einer oder mehreren Komponenten der Dichtmassen eingearbeitet werden.

Selbst die Behandlung von bereits ausgehärteten, vernetzten Dichtmassenoberflächen kann durch Aufbringen von Lösungen bzw. Suspensionen der erfindungsgemäß verwendeten Substanz durchgeführt werden, indem der Wirkstoff durch Quellung bzw. Diffusion in die Dichtmasse transportiert wird.

Erfindungsgemäß einsetzbare Dichtstoffe können sowohl auf Silikon-, Urethan- als auch Acrylbasis hergestellt werden. Dichtstoffe auf Urethanbasis sind bspw. in Ullmann's Encyclopedia of Industrial Chemistry (8. Auflage 2003, Kapitel 4) sowie US 4,417,042 offenbart.

Silikondichtstoffe sind dem Fachmann bekannt, bspw. aus der EP 0 118 030 A, EP 0 316 591 A, EP 0 327 847 A, EP 0 553 143 A, DE 195 49 425 A und US 4,417,042.

Beispiele für Acryldichtstoffe sind u.a. in der WO 01/09249 oder der US 5,077,360 offenbart.

Insbesondere sind bei Raumtemperatur vernetzende Systeme, wie bspw. in der EP 0 327 847 oder US 5,077,360 beschrieben, bevorzugt. Dabei kann es sich um ein- oder mehrkomponentige Systeme handeln, wobei in den mehrkomponentigen Systemen Katalysator und Vernetzer getrennt vorliegen können (beispielsweise offenbart in den Patentschriften US 4,891,400 und US 5,502,144), oder andere sogenannte Silikon RVT 2K-Systeme, insbesondere platinfreie Systeme ........

Besonders bevorzugt sind sogenannte Einkomponentensysteme, die alle Inhaltsstoffe zum Aufbau einer Dichtmasse enthalten, unter Abschluß von Luftfeuchtigkeit und/oder Luftsauerstoff gelagert werden und am Einsatzort unter Reaktion mit dem Luftsauerstoff aushärten. Besonders bevorzugt sind die sogenannten Silikon-Neutralsysteme, in denen die Umsetzung von Vernetzern mit dem Wasser der Umgebungsluft nicht zu korrosiven, sauren, basischen oder geruchsintensiven Spaltprodukten führt. Beispiele für solche Systeme sind in der DE 195 49 425, der US 4,417,042 oder der EP 0 327 847 offenbart.

Die Dichtungsmassen und insbesondere Fugendichtungsmassen, können wäßrige oder organische Lösungsmittel enthalten. Als organische Lösungsmittel kommen Kohlenwasserstoffe wie Cyclohexan, Toluol oder auch Xylol oder Petrolether in Frage. Weitere Lösungsmittel sind Ketone wie Methylbutylketon oder Chlorkohlenwasserstoffe.

Weiterhin können die Dichtungsmassen noch weitere kautschukartige Polymere enthalten. Hier kommen relativ niedermolekulare, handelsübliche Typen von Polyisobutylen, Polyisopren oder auch Polybutadienstyrol in Frage. Auch die Mitverwendung von abgebautem Naturkauschuk oder von Neoprenkautschuk ist möglich. Hier können auch bei Raumtemperatur noch fließfähige Typen eingesetzt werden, welche häufig als "Flüssigkautschuk" bezeichnet werden.

Die erfindungsgemäßen Dichtungsmassen können verwendet werden, um die verschiedensten Materialien miteinander zu verbinden bzw. abzudichten. Hier ist in erster Linie an die Verwendung auf Beton, auf Glas, auf Putz und/oder Emaille sowie Keramik und Porzellan gedacht. Aber auch das Verbinden bzw. Abdichten von Formteilen bzw. Profilen aus Aluminium, Stahl, Zink oder auch aus Kunststoffen wie PVC oder Polyurethanen oder Acrylharzen ist möglich. Schließlich sei das Abdichten von Holz oder Holzmaterialien mit den verschiedensten anderen Werkstoffen erwähnt.

Die Standfestigkeit von Fugendichtungsmassen wird in der Regel durch Zusatz von feinteiligen Feststoffen - auch Füllstoffe genannt - erzielt. Diese lassen sich in solche organischer und solche anorganischer Art unterscheiden. Als anorganische Füllstoffe können beispielsweise Kieselsäure, Siliciumdioxid (gecoatet oder ungecoatet), Kreide - gecoatet oder ungecoatet - und/oder Zeolithe bevorzugt sein. Letztere können zudem auch als Trockenmittel fungieren. Als organischer Füllstoff kommt z. B. PVC- Pulver in Betracht. Die Füllstoffe tragen im allgemeinen wesentlich dazu bei, dass die Dichtungsmasse nach der Anwendung einen notwendigen inneren Halt besitzt, so dass ein Auslaufen oder Ausbuchten der Dichtungsmasse aus senkrechten Fugen verhindert wird. Die genannten Zusatz- bzw. Füllstoffe lassen sich in Pigmente und thixotropierende Füllstoffe, auch verkürzt als Thixotropiermittel bezeichnet, einteilen.

Als Thixotropierungsmittel eignen sich die bekannten Thixotropierungsmittel wir Bentone, Kaoline oder auch organische Verbindungen wie hydriertes Rizinusöl bzw. Derivate desselben mit mehrfunktionellen Aminen oder die Umsetzungsprodukte von Stearinsäure oder Rizinolsäure mit Ethylendiamin. Als besonders günstig hat sich die Mitverwendung von Kieselsäure, insbesondere von Kieselsäure aus der Pyrolyse erwiesen. Außerdem kommen als Thixotropiermittel im wesentlichen quellfähige Polymerpulver in Betracht. Beispiele sind hierfür Polyacrylnitril, Polyurethan, Polyvinylchlorid, Polyacrylsäureester, Polyvinylalkohole, Polyvinylacetate sowie die entsprechenden Copolymerisate. Besonders gute Ergebnisse lassen sich mit feinteiligem Polyvinylchloridpulver erhalten. Neben den Thixotropierungsmitteln können auch noch zusätzlich Haftvermittler eingesetzt werden wie etwa Mercaptoalkylsilan. Hier hat es sich als zweckmäßig erwiesen, ein Monomercaptoalkyltrialkoxysilan einzusetzen. Handelsüblich ist beispielsweise das Mercaptopropyltrimethoxysilan.

Die Eigenschaften einer Fugendichtungsmasse lassen sich noch weiter verbessern, wenn dem als Thixotropiermittel verwendeten Kunststoffpulver weitere Komponenten zugesetzt werden. Dabei handelt es sich um Stoffe, die unter die Kategorie der für Kunststoffe angewendeten Weichmacher bzw. Quellmittel und Quellhilfsmittel fallen.

Es kommen z. B. Weichmacher, insbesondere für die Dichtungsmassen auf Urethan- bzw. Acrylbasis aus der Klasse der Phthalsäureester in Betracht. Beispiele für anwendbare Verbindungen aus dieser Substanzklasse sind Dioctylphthalat, Dibutylphthalat und Benzylbutylphthalat. Weitere geeignete Substanzklassen sind Chlorparaffine, Alkylsulfonsäureester etwa der Phenole oder Kresole sowie Fettsäureester.

Für die Silikondichtungsmassen sind als Weichmacher Silikonöle, besonders bevorzugt Polydimethylsiloxane, sowie Kohlenwasserstoffe und/oder deren Gemische, von denen besonders Kohlenwasserstoffe bzw. deren Gemische mit einem Siedepunkt von größer 200°C, insbesondere größer 230 °C, gut geeignet.

Als Quellhilfsmittel sind solche niedermolekularen organischen Substanzen einsetzbar, die mit dem Polymerpulver und dem Weichmacher mischbar sind. Derartige Quellhilfsmittel lassen sich den einschlägigen Kunststoff- und Polymer-Handbüchern für den Fachmann entnehmen. Als bevorzugte Quellhilfsmittel für Polyvinylchloridpulver dienen Ester, Ketone, aliphatische Kohlenwasserstoffe, aromatische Kohlenwasserstoffe sowie aromatische Kohlenwasserstoffe mit Alkylsubstituenten.

Als Pigmente und Farbstoffe werden die für diese Verwendungszwecke bekannten Substanzen wie Titandioxid, Eisenoxide und Ruß verwendet

Zur Verbesserung der Lagerstabilität werden bekanntermaßen den Dichtungsmassen Stabilisatoren wie Benzoylchlorid, Acetylchlorid, Toluolsulfonsäuremethylester, Carbodiimide und/oder Polycarbodiimide zugesetzt. Als besonders gute Stabilisatoren haben sich Olefine mit 8 bis 20 Kohlenstoffatomen erwiesen. Neben der stabilisierenden Wirkung können diese auch Aufgaben von Weichmachern bzw. Quellmitteln erfüllen. Bevorzugt werden Olefine mit 8 bis 18 Kohlenstoffatomen, insbesondere wenn die Doppelbindung in 1,2-Stellung angeordnet ist. Beste Ergebnisse erhält man, wenn die Molekülstruktur dieser Stabilisatoren linear ist.

Insbesondere für die Anwendung von Fugendichtungsmassen ist der Einsatz von erfindungsgemäß zu verwendenden Stoffen, die Terpene und/oder Duftstoffalkohole freisetzen, geeignet, da sich bei freien Terpenen, insbesondere Terpenalkoholen, wie z.B. Farnesol, Formulierungsprobleme durch Abreagieren mit für die Anwendung notwendigen reaktiven Komponenten der Fugendichtungsmassen, insbesondere bei Raumtemperatur vernetzende Dichtungsmassen werden zur bessern Aushärtung Katalysatoren zugesetzt, die insbesondere mit reaktiven Verbindungen, die Hydroxylgruppen tragen, insbesondere Terpenalkoholen und/oder Duftstoffalkoholen, wie Farnesol oder Eugenol, abreagieren können. Sind diese Hydroxylgruppen erfindungsgemäß durch kovalente Bindungen geschützt bzw. liegen die Wirkstoffe nicht frei, sondern in den Käfigmolekülen eingeschlossen vor, wird diese Reaktion im wesentlichen verhindert. Aushärtungsprozeß und physikalische Materialeigenschaften werden nicht negativ beeinflußt.

Weiterhin lassen sich freie Terpen- und/oder Duftstoffalkohole sehr leicht aus den Fugendichtungsmassen durch Wasser oder Seifenlauge herauslösen, so dass ein längerfristiger Schutzeffekt vor unansehnlicher Sporenbildung nicht möglich ist. Gerade in einer feuchten Umgebung, in der Schimmelpilze gut gedeihen können, lässt demnach der Schutz von in Dichtungsmassen eingearbeiteten Wirkstoffen schnell nach. Gerade die wiederholte Befeuchtung kann die Hydrolyse in dem für die Wirkung notwendigen Maß beschleunigen bzw. hervorrufen. Die Freisetzung erfolgt demnach bedarfsabhängig und kontrolliert.

Diese Nachteile weisen die erfindungsgemäß zu verwendenden Stoffe nicht auf, so dass die Einarbeitbarkeit bzw. Formulierungstechnik verbessert und gleichzeitig eine längerfristige Hemmung der asexuellen Vermehrung erzielt wird.

Durch die erfindungsgemäße Verwendung von Stoffen, die Terpene und/oder Duftstoffalkohole freisetzen, zur Hemmung der asexuellen Vermehrung von Pilzen umgeht man das Problem der Resistenzbildung aufgrund biozider Wirkstoffe. Bei der Anwendung in schimmelgefährdeten Bau- und Bauhilfsstoffen, insbesondere in Klebstoffen, Anstrichstoffen und Dichtungsmassen, besonders bevorzugt in Fugendichtungsmassen werden durch die Hemmung der Sporenbildung mehrere erwünschte Effekte erzielt:
a) Verhinderung von Verfärbungen durch pigmentierte Sporen.
b) Verzögerung der Ausbreitung des Schimmelbefalls.
c) Verminderung der Allergenbelastung.

Eine weitere bevorzugte Ausführungsform der vorliegenden Erfindung sind Tapetenkleber, enthaltend 0,00001 bis 10 Gew.-% der erfindungsgemäß zu verwendenden Stoffe, die Terpene und/oder Duftstoffalkohole freisetzen. Tapetenkleister aus wässrigen Lösungen von Hydrokolloiden wie Methylcellulose, Methylhydroxypropylcellulose oder wasserlöslichen Stärkederivaten. Auch wässrige Dispersionen von filmbildenden Hochmolekularen wie Polyvinylacetat können, insbesondere in Verbindung mit den bereits erwähnten Cellulose- und Stärkederivaten, eingesetzt werden.

Als Filtermedien können alle bekannten Arten eingesetzt werden, solange sie für den Einsatz in Wasser- oder Luftfilteranlagen, insbesondere für Klimaanlagen oder Raumluftbe- oder -entfeuchter, geeignet sind. Insbesondere sind Filtermaterialien aus Cellulose, Glasfasern, PVC-Fasern, Polyesterfasern, Polyamidfasern, insbesondere Nylonfasern, Vliesstoffen, Sintermaterialien und Membranfilter zu nennen.

Die Konzentration von zur Hemmung der asexuellen Vermehrung von Pilzen eingesetzten Stoffen, die Terpene und/oder Duftstoffalkohole freisetzen, in den erfindungsgemäßen Mitteln kann durch den Fachmann in einem breiten Bereich variiert werden, abhängig von den Einsatzbedingungen der Mittel.

Die erfindungsgemäßen Wasch- und/oder Reinigungsmittel, enthalten 0,000001 bis 5 Gew.-% an erfindungsgemäß zu verwendenden Stoffen, die Terpene und/oder Duftstoffalkohole freisetzen. Besonders bevorzugt sind Konzentrationen von 0,00001 bis 1,0 Gew.-% und insbesondere 0,0001 bis 0,5 Gew.-%. Ganz besonders bevorzugt enthalten die Wasch- und Reinigungsmittel 0,0001 bis 0,01 Gew.-% dieser Stoffe.

Die erfindungsgemäßen Mittel werden nach üblichen und dem Fachmann bekannten Rezepturen hergestellt. Die erfindungsgemäß zu verwendenden Stoffe, die Terpene und/oder Duftstoffalkohole freisetzen, werden vorzugsweise den bereits fertig zubereiteten Mitteln zugegeben, sie können aber auch während des Herstellungsprozesses zugesetzt werden, wenn dies gewünscht ist.

Die Hemmung der asexuellen Vermehrung von Pilzen auf Textilien oder Kunststoffoberflächen verhindert häufig eine Reinfektion von zuvor bereits befallenen Körperbereichen. Die Hemmung der asexuellen Vermehrung von Pilzen auf Keramiken, Kunststoffen oder Metallen verringert das Infektions- bzw. Reinfektionsrisiko, ohne die Haut, die Schleimhäute oder die Abwässer mit fungizid bzw. fungistatisch wirkenden Substanzen zu belasten. Ebenso können Katheter sowie andere aus Kunststoff oder Metallen hergestellte medizinische Geräte und/oder Prothesen durch die Verwendung von Stoffen, die Terpene und/oder Duftstoffalkohole freisetzen, beispielsweise in Spülungen oder Reinigungsmitteln weitgehend von Pilzen freigehalten werden.

Nach einer weiteren besonderen Ausführungsform werden die erfindungsgemäß zu verwendenden Stoffe, die Terpene und/oder Duftstoffalkohole freisetzen, zu Wasch- und/oder Reinigungsmitteln zugegeben. Insbesondere die modernen Textilfasern, die nicht mit Vollwaschmittel bzw. bei hohen Temperaturen gewaschen werden können, können durch übliche Feinwaschmittel bzw. Waschtemperaturen bei 30 oder 40 °C nicht vollständig von Pilzen befreit werden. Ein Vorteil des Einsatzes solcher erfindungsgemäß verwendbaren Stoffe in Wasch- und Reinigungsmitteln ist es, dass trotz geringer Abwasserbelastung sowie geringem Risiko zur Resistenzenbildung Kleidungsstücke von sporulierenden Pilzen freigehalten werden können.

Die erfindungsgemäß zu verwendenden Stoffe, die Terpene und/oder Duftstoffalkohole freisetzen, können erfindungsgemäß auch zu Reinigungsmitteln, die zum Säubern harter Oberflächen, wie zum Beispiel von Böden, Kacheln, Fliesen, Kunststoffen sowie anderen harten Oberflächen im Haushalt, insbesondere in feuchten Räumen (z.B. Bad) oder in der Arztpraxis zugegeben werden. Sie können dort die unerwünschte Verfärbung von Oberflächen dort die unerwünschte Verfärbung von Oberflächen durch Bildung gefärbter Sporen (z.B. schwarz von Aspergillus niger) verhindern. Auch Duschvorhänge und andere Badetextilien sowie Kunststoffe können vor Schimmel-bedingten Verfärbungen geschützt werden.

Unter Wasch- und Reinigungsmitteln werden im erfindungsgemäßen Zusammenhang im weitesten Sinn tensidhaltige Zubereitungen in fester Form (Partikel, Pulver usw.), halbfester Form (Pasten usw.), flüssiger Form (Lösungen, Emulsionen, Suspensionen, Gele usw.) und gasähnlicher Form (Aerosole usw.) verstanden, die im Hinblick auf eine vorteilhafte Wirkung bei der Anwendung ein Tensid oder mehrere Tenside enthalten, üblicherweise neben weiteren Komponenten, die für den jeweiligen Anwendungszweck üblich sind. Beispiele für solche tensidhaltige Zubereitungen sind tensidhaltige Waschmittelzubereitungen, tensidhaltige Reinigungsmittel für harte Oberflächen, oder tensidhaltige Aviviermittelzubereitungen, die jeweils fest oder flüssig sein können, jedoch auch in einer Form vorliegen können, die feste und flüssige Komponenten oder Teilmengen der Komponenten nebeneinander umfasst.

Die Wasch- und Reinigungsmittel können üblicherweise enthaltende Inhaltsstoffe enthalten, wie anionische, nichtionische, kationische und amphotere Tenside, anorganische und organische Buildersubstanzen, spezielle Polymere (beispielsweise solche mit Cobuildereigenschaften), Schauminhibitoren, Farbstoffe und ggf. zusätzliche Duftstoffe (Parfums), Bleichmittel (wie beispielsweise Peroxo-Bleichmittel und Chlor-Bleichmittel), Bleichaktivatoren, Bleichstabilisatoren, Bleichkatalysatoren, Enzyme und Vergrauungsinhibitoren, ohne dass die Inhaltsstoffe auf diese Substanzgruppen beschränkt sind. Häufig sind wichtige Inhaltsstoffe dieser Zubereitungen auch Waschhilfsmittel, für die beispielhaft und nicht beschränkend optische Aufheller, UV-Schutzsubstanzen, sog. Soil Repellents, also Polymere, die einer Wiederanschmutzung von Fasern entgegenwirken, verstanden werden. Die einzelnen Substanzgruppen werden im weiteren näher erläutert.

Für den Fall, dass die Zubereitungen zumindest zum Teil als Formkörper vorliegen, können auch Binde- und Desintegrationshilfsmittel enthalten sein.

Als Tenside können anionische, nichtionische, zwitterionische und kationische Tenside eingesetzt werden.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von 2-Sulfofettsäuren (Estersulfonate), z.B. die 2-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. In Waschund Reinigungsmitteln sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Wasch- und Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden, und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Bevorzugt sind die Natrium- oder Kaliumsalze, insbesondere die Natriumsalze. Die Tenside können ebenfalls in Form ihrer Magnesiumsalze eingesetzt werden.

Im Rahmen der vorliegenden Erfindung sind solche Mittel bevorzugt, die 5 bis 50 Gew.-%, vorzugsweise 7,5 bis 40 Gew.-% und insbesondere 15 bis 25 Gew.-% eines oder mehrerer anionischer Tensid(e), enthalten.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, sowie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Eine weitere Klasse von nichtionischen Tensiden, die vorteilhaft eingesetzt werden kann, sind die Alkylpolyglycoside (APG). Einsetzbare Alkypolyglycoside genügen der allgemeinen Formel RO(G)_{z}, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen steht und G das Symbol ist, das für eine Glykoseeinheit mit 5 oder 6 C-Atomen, vorzugsweise für Glucose, steht. Der Glycosidierungsgrad z liegt dabei zwischen 1,0 und 4,0, vorzugsweise zwischen 1,0 und 2,0 und insbesondere zwischen 1,1 und 1,4.

Bevorzugt eingesetzt werden lineare Alkylpolyglucoside, also Alkylpolyglycoside, in denen der Polyglycosylrest ein Glucoserest und der Alkylrest ein n-Alkylrest ist.

Die erfindungsgemäßen tensidhaltigen Zubereitungen können bevorzugt Alkylpolyglycoside enthalten, wobei Gehalte der für Wasch-, Spül- oder Reinigungszwecke vorgesehenen Zubereitungen an APG von über 0,2 Gew.-%, bezogen auf die gesamte Zubereitung, bevorzugt sind. Besonders bevorzugte tensidhaltige Zubereitungen enthalten APG in Mengen von 0,2 bis 10 Gew.-%, vorzugsweise in Mengen von 0,2 bis 5 Gew.-% und insbesondere in Mengen von 0,5 bis 3 Gew.-%.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (W-I), 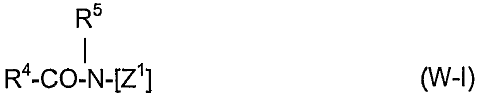 in der R⁴CO für einen aliphatischen Acylrest mit 6 bis 22 Kohlenstoffatomen, R⁵ für Wasserstoff, einen Alkyl- oder Hydroxyalkylrest mit 1 bis 4 Kohlenstoffatomen und [Z¹] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (W-II), 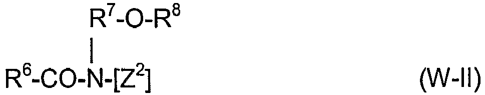 in der R⁶ für einen linearen oder verzweigten Alkyl- oder Alkenylrest mit 7 bis 12 Kohlenstoffatomen, R⁷ für einen linearen, verzweigten oder cyclischen Alkylrest oder einen Arylrest mit 2 bis 8 Kohlenstoffatomen und R⁸ für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z²] für einen linearen Polyhydroxyalkylrest steht, dessen Alkylkette mit mindestens zwei Hydroxylgruppen substituiert ist, oder alkoxylierte, vorzugsweise ethoxylierte oder propxylierte Derivate dieses Restes.

[Z²] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise, wie in der WO-A-95/07331 beschrieben, durch Umsetzung mit Fettsäuremethylestern in Gegenwart eines Alkoxids als Katalysator in die gewünschten Polyhydroxyfettsäureamide überführt werden.

Weiterhin kann es bevorzugt sein, neben anionischen und nichtionischen Tensiden auch kationische Tenside einzusetzen.

Als textilweichmachende Substanzen sind insbesondere kationische Tenside zu nennen. Beispiele kationische Tenside sind insbesondere quartäre Ammoniumverbindungen, kationische Polymere und Emulgätoren.

Geeignete Beispiele sind quartäre Ammoniumverbindungen der Formeln (W-III) und (W-IV) 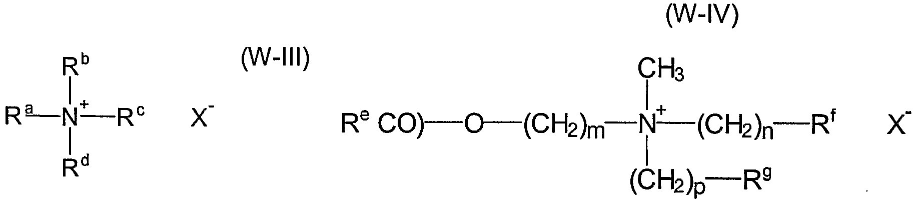 wobei in (W-IV) R^{a} und R^{b} für einen acyclischen Alkylrest mit 12 bis 24 Kohlenstoffatomen, R^{c} für einen gesättigten C₁-C₄ Alkyl- oder Hydroxyalkylrest steht, R^{d} entweder gleich R^{a}, R^{b} oder R^{c} ist oder für einen aromatischen Rest steht. X- steht entweder für ein Halogenid-, Metho-sulfat-, Methophosphat- oder Phosphation sowie Mischungen aus diesen. Beispiele für kationische Verbindungen der Formel (W-III) sind Didecyldimethylammoniumchlorid, Ditalgdimethylammoniumchlorid oder Dihexadecylammoniumchlorid.

Verbindungen der Formel (W-IV) sind sogenannte Esterquats. Esterquats zeichnen sich durch eine hervorragende biologische Abbaubarkeit aus. Hierbei steht R^{e} für einen aliphatischen Acylrest mit 12 bis 22 Kohlenstoffatomen mit 0, 1, 2 oder 3 Doppelbindungen; R^{f} steht für H, OH oder O(CO)R^{h}, R^{g} steht unabhängig von R^{f} für H, OH oder O(CO)Rⁱ, wobei R^{h} und Rⁱ unabhängig voneinander jeweils für einen aliphatischen Acylrest mit 12 bis 22 Kohlenstoffatomen mit 0, 1, 2 oder 3 Doppelbindungen steht. m, n und p können jeweils unabhängig voneinander den Wert 1, 2 oder 3 haben. X⁻ kann entweder ein Halogenid-, Methosulfat-, Methophosphat- oder Phosphation sowie Mischungen aus diesen sein. Bevorzugt sind Verbindungen, die für R^{f} die Gruppe O(CO)R^{h} und für R^{c} und R^{h} Alkylreste mit 16 bis 18 Kohlenstoffatomen enthalten. Besonders bevorzugt sind Verbindungen, bei denen R^{g} zudem für OH steht. Beispiele für Verbindungen der Formel (IV) sind Methyl-N-(2-hydroxyethyl)-N,N-di(talgacyl-oxyethyl)ammonium-methosulfat, Bis-(palmitoyl)-ethyl-hydroxyethyl-methyl-ammonium-methosulfat oder Methyl-N,N-bis(acyloxyethyl)-N-(2-hydroxyethyl)ammonium-methosulfat. Werden quarternierte Verbindungen der Formel (W-IV) eingesetzt, die ungesättigte Alkylketten aufweisen, sind die Acylgruppen bevorzugt, deren korrespondierenden Fettsäuren eine Jodzahl zwischen 5 und 80, vorzugsweise zwischen 10 und 60 und insbesondere zwischen 15 und 45 aufweisen und die ein cis/trans-Isomerenverhältnis (in Gew.-%) von größer als 30 : 70, vorzugsweise größer als 50 : 50 und insbesondere größer als 70 : 30 haben. Handelsübliche Beispiele sind die von Stepan unter der Marke Stepantex^{®} vertriebenen Methylhydroxyalkyldialkoyloxyalkylammoniummethosulfate oder die unter Dehyquart^{®} bekannten Produkte von Cognis bzw. die unter Rewoquat^{®} bekannten Produkte von Goldschmidt-Witco. Weitere bevorzugte Verbindungen sind die Diesterquats der Formel (W-V), die unter dem Namen Rewoquat^{®} W 222 LM bzw. CR 3099 erhältlich sind und neben der Weichheit auch für Stabilität und Farbschutz sorgen. 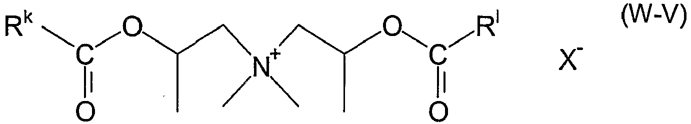 R^{k} und R^{l} stehen dabei unabhängig voneinander jeweils für einen aliphatischen Acylrest mit 12 bis 22 Kohlenstoffatomen mit 0, 1, 2 oder 3 Doppelbindungen.

Neben den oben beschriebenen quartären Verbindungen können auch andere bekannte Verbindungen eingesetzt werden, wie beispielsweise quartäre Imidazoliniumverbindungen der Formel (W-VI), 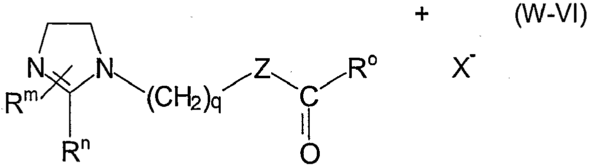 wobei R^{m} für H oder einen gesättigten Alkylrest mit 1 bis 4 Kohlenstoffatomen, Rⁿ und R^{o} unabhängig voneinander jeweils für einen aliphatischen, gesättigten oder ungesättigten Alkylrest mit 12 bis 18 Kohlenstoffatomen, Rⁿ alternativ auch für O(CO)R^{p} stehen kann, wobei R^{p} einen aliphatischen, gesättigten oder ungesättigten Alkylrest mit 12 bis 18 Kohlenstoffatomen bedeutet, und Z eine NH-Gruppe oder Sauerstoff bedeutet und X- ein Anion ist. q kann ganzzahlige Werte zwischen 1 und 4 annehmen.

Weitere geeignete quartäre Verbindungen sind durch Formel (W-VII) beschrieben, 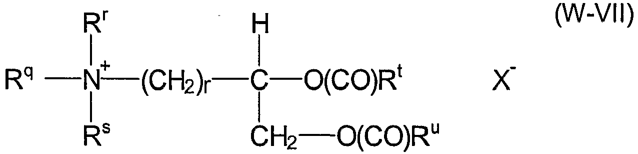 wobei R^{q}, R^{r} und R^{s} unabhängig voneinander für eine C₁₋₄-Alkyl-, Alkenyl- oder Hydroxyalkylgruppe steht, R^{t} und R^{u} jeweils unabhängig ausgewählt eine C₈₋₂₈-Alkylgruppe darstellt und r eine Zahl zwischen 0 und 5 ist.

Neben den Verbindungen der Formeln W-III bis W-VII können auch kurzkettige, wasserlösliche, quartäre Ammoniumverbindungen eingesetzt werden, wie Trihydroxyethylmethylammonium-methosulfat oder die Alkyltrimethylammoniumchloride, Dialkyldimethylammoniumchloride und Trialkylmethylammoniumchloride, z. B. Cetyltrimethylammoniumchlorid, Stearyltrimethylammoniumchlorid, Distearyldimethylammoniumchlorid, Lauryldimethylammoniumchlorid, Lauryldimethylbenzylammoniumchlorid und Tricetylmethylammoniumchlorid.

Auch protonierte Alkylaminverbindungen, die weichmachende Wirkung aufweisen, sowie die nicht quaternierten, protonierten Vorstufen der kationischen Emulgatoren sind geeignet.

Weitere erfindungsgemäß verwendbare kationische Verbindungen stellen die quaternisierten Proteinhydrolysate dar.

Zu den geeigneten kationischen Polymeren zählen die Polyquaternium-Polymere, wie sie im CTFA Cosmetic Ingredient Dictionary (The Cosmetic, Toiletry und Fragrance, Inc., 1997), insbesondere die auch als Merquats bezeichneten Polyquaternium-6-, Polyquaternium-7-, Polyquaternium-10-Polymere (Ucare Polymer IR 400; Amerchol), Polyquaternium-4-Copolymere, wie Pfropfcopolymere mit einen Cellulosegerüst und quartären Ammoniumgruppen, die über Allyldimethylammoniumchlorid gebunden sind, kationische Cellulosederivate, wie kationisches Guar, wie Guar-hydroxypropyltriammoniumchlorid, und ähnliche quaternierte Guar-Derivate (z. B. Cosmedia Guar, Hersteller: Cognis GmbH), kationische quartäre Zuckerderivate (kationische Alkylpolyglucoside), z. B. das Handelsprodukt Glucquat^{®}100, gemäß CTFA-Nomenklatur ein "Lauryl Methyl Gluceth-10 Hydroxypropyl Dimonium Chloride", Copolymere von PVP und Dimethylaminomethacrylat, Copolymere von Vinylimidazol und Vinylpyrrolidon, Aminosilicon-polymere und Copolymere,

Ebenfalls einsetzbar sind polyquaternierte Polymere (z. B. Luviquat Care von BASF) und auch kationische Biopolymere auf Chitinbasis und deren Derivate, beispielsweise das unter der Handelsbezeichnung Chitosan^{®} (Hersteller: Cognis) erhältliche Polymer.

Erfindungsgemäß ebenfalls geeignet sind kationische Silikonöle wie beispielsweise die im Handel erhältlichen Produkte Q2-7224 (Hersteller: Dow Corning; ein stabilisiertes Trimethylsilylamodimethicon), Dow Corning 929 Emulsion (enthaltend ein hydroxyl-amino-modifiziertes Silicon, das auch als Amodimethicone bezeichnet wird), SM-2059 (Hersteller: General Electric), SLM-55067 (Hersteller: Wacker) Abil^{®}-Quat 3270 und 3272 (Hersteller: Goldschmidt-Rewo; diquartäre Polydimethylsiloxane, Quaternium-80), sowie Siliconquat Rewoquat^{®} SQ 1 (Tegopren^{®} 6922, Hersteller: Goldschmidt-Rewo).

Ebenfalls einsetzbar sind Verbindungen der Formel (W-VIII), 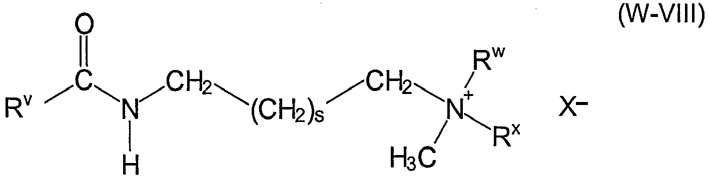 die Alkylamidoamine in ihrer nicht quaternierten oder, wie dargestellt, ihrer quaternierten Form, sein können. R^{v} kann ein aliphatischer Acylrest mit 12 bis 22 Kohlenstoffatomen mit 0, 1, 2 oder 3 Doppelbindungen sein. s kann Werte zwischen 0 und 5 annehmen. R^{w} und R^{x} stehen unabhängig voneinander jeweils für H, C₁₋₄-Alkyl oder Hydroxyalkyl. Bevorzugte Verbindungen sind Fettsäureamidoamine wie das unter der Bezeichnung Tego Amid^{®}S 18 erhältliche Stearylamidopropyldimethylamin oder das unter der Bezeichnung Stepantex^{®}X 9124 erhältliche 3-Talgamidopropyl-trimethylammonium-methosulfat, die sich neben einer guten konditionierenden Wirkung auch durch farbübertragungsinhibierende Wirkung sowie speziell durch ihre gute biologische Abbaubarkeit auszeichnen.

Werden kationische Tenside eingesetzt, so sind sie in den Zubereitungen bevorzugt in Mengen von 0,01 bis 10 Gew.-%, insbesondere von 0,1 bis 3,0 Gew.-% enthalten.

Der Gesamttensidgehalt kann in den erfindungsgemäßen Mitteln zwischen 5 und 50 Gew.-%, bevorzugt zwischen 10 und 35 Gew.-% liegen.

Neben den Tensiden sind Gerüststoffe die wichtigsten Inhaltsstoffe von Wasch- und Reinigungsmitteln. In den erfindungsgemäßen tensidhaltigen Zubereitungen können üblicherweise in Wasch- und Reinigungsmitteln eingesetzte Gerüststoffe enthalten sein, insbesondere also Zeolithe, Silicate, Carbonate, organische Cobuilder und - wo keine ökologischen Vorurteile gegen ihren Einsatz bestehen - auch die Phosphate.

Geeignete kristalline, schichtförmige Natriumsilicate besitzen die allgemeine Formel NaMSiₓO₂ₓ₊₁ ·H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilicate werden beispielsweise in der europäischen Patentanmeldung EP-A-0 164 514 beschrieben. Bevorzugte kristalline Schichtsilikate der angegebenen Formel sind solche, in denen M für Natrium steht und x die Werte 2 oder 3 annimmt. Insbesondere sind sowohl ß- als auch δ-Natriumdisilicate Na₂Si₂O₅ · yH₂O bevorzugt, wobei ß-Natriumdisilicat beispielsweise nach dem Verfahren erhalten werden kann, das in der internationalen Patentanmeldung WO-A-91/08171 beschrieben ist.

Einsetzbar sind auch amorphe Natriumsilicate mit einem Modul Na₂O : SiO₂ von 1 : 2 bis 1 : 3,3, vorzugsweise von 1 : 2 bis 1 : 2,8 und insbesondere von 1 : 2 bis 1 : 2,6, welche löseverzögert sind und Sekundärwascheigenschaften aufweisen. Die Löseverzögerung gegenüber herkömmlichen amorphen Natriumsilicaten kann dabei auf verschiedene Weise, beispielsweise durch Oberflächenbehandlung, Compoundierung, Kompaktierung/Verdichtung oder durch Übertrocknung hervorgerufen worden sein. Sogenannte röntgenamorphe Silicate, welche ebenfalls eine Löseverzögerung gegenüber den herkömmlichen Wassergläsern aufweisen, werden beispielsweise in der deutschen Patentanmeldung DE-A- 44 00 024 beschrieben. Die Produkte weisen mikrokristalline Bereiche der Größe 10 bis einige Hundert nm auf, wobei Werte bis max. 50 nm und insbesondere bis max. 20 nm bevorzugt sind. Insbesondere bevorzugt sind verdichtete/kompaktierte amorphe Silicate, compoundierte amorphe Silicate und übertrocknete röntgenamorphe Silicate.

Ein gegebenenfalls eingesetzter feinkristalliner, synthetischer und gebundenes Wasser enthaltender Zeolith ist vorzugsweise Zeolith A und/oder P. Als Zeolith des P-Typs wird Zeolith MAP (z. B. Handelsprodukt: Doucil A24 der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma CONDEA Augusta S.p.A. unter dem Markennamen VEGOBOND AX^{®} vertrieben wird und durch die Formel

nNa₂O · (1-n)K₂O · Al₂O₃ · (2 - 2,5)SiO₂ · (3,5 - 5,5) H₂O

beschrieben werden kann. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Selbstverständlich ist in Waschmitteln auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern deren Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von tensidhaltigen Zubereitungen gemäß der Erfindung. Insbesondere sind in diesem Zusammenhang Citronensäure, Bernsteinsäure, Glutarsäure, Adipinsäure, Gluconsäure und beliebige Mischungen von diesen zu nennen.

Als Builder sind weiter polymere Polycarboxylate geeignet. Dies sind beispielsweise die Alkalimetallsalze der Polyacrylsäure oder der Polymethacrylsäure, beispielsweise solche mit einer relativen Molekülmasse von 500 bis 70.000 g/mol.

Bei den für polymere Polycarboxylate angegebenen Molmassen handelt es sich im Rahmen der vorliegenden Erfindung um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsäuren gemessenen Molmassen sind in der Regel deutlich höher als die im Rahmen der vorliegenden Erfindung angegebenen Molmassen.

Geeignete Polymere sind insbesondere Polyacrylate, die bevorzugt eine Molmasse von 2.000 bis 20.000 g/mol aufweisen. Aufgrund ihrer überlegenen Löslichkeit können aus dieser Gruppe wiederum die kurzkettigen Polyacrylate bevorzugt sein, die Molmassen von 2.000 bis 10.000 g/mol, besonders bevorzugt von 3.000 bis 5.000 g/mol, aufweisen.

Geeignet sind weiterhin copolymere Polycarboxylate, insbesondere solche der Acrylsäure mit Methacrylsäure oder der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molmasse, bezogen auf freie Säuren, beträgt im allgemeinen 2.000 bis 70.000 g/mol, vorzugsweise 20.000 bis 50.000 g/mol und insbesondere 30.000 bis 40.000 g/mol.

Die (co-)polymeren Polycarboxylate können entweder als Pulver oder als wäßrige Lösung eingesetzt werden. Der Gehalt an (co-)polymeren Polycarboxylaten in den erfindungsgemäßen Wasch- und Reinigungsmitteln beträgt vorzugsweise 0,5 bis 20 Gew.-%, insbesondere 3 bis 10 Gew.-%.

Zur Verbesserung der Wasserlöslichkeit können die Polymere auch Allylsulfonsäuren, Allyloxybenzolsulfonsäure und Methallylsulfonsäure als Monomer enthalten.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder Salze der Acrylsäure und der 2-Alkylallylsulfonsäure sowie ZuckerDerivate enthalten.

Weiter bevorzugte Copolymere sind solche, die als Monomere vorzugsweise Acrolein und Acrylsäure/Acrylsäuresalze bzw. Acrolein und Vinylacetat enthalten.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate, die zum Teil neben Co-Builder-Eigenschaften auch eine bleichstabilisierende Wirkung aufweisen.

Weitere geeignete Buildersubstanzen sind Polyacetale, die durch Umsetzung von Dialdehyden mit Polyolcarbonsäuren erhalten werden können, die 5 bis 7 Kohlenstoffatome und mindestens 3 Hydroxygruppen aufweisen. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500.000 g/mol. Dabei ist ein Polysaccharid mit einem Dextrose-Äquivalent (DE) im Bereich von 0,5 bis 40, insbesondere von 2 bis 30, bevorzugt, wobei DE ein gebräuchliches Maß für die reduzierende Wirkung eines Polysaccharids im Vergleich zu Dextrose ist, welche ein DE von 100 besitzt. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2.000 bis 30.000 g/mol. Ein bevorzugtes Dextrin ist in der britischen Patentanmeldung 94 19 091 beschrieben.

Bei den oxidierten Derivaten derartiger Dextrine handelt es sich um deren Umsetzungsprodukte mit Oxidationsmitteln, die in der Lage sind, mindestens eine Alkoholfunktion des Saccharidrings zur Carbonsäurefunktion zu oxidieren. Ebenfalls geeignet ist ein oxidiertes Oligosaccharid, wobei ein an C₆ des Saccharidrings oxidiertes Produkt besonders vorteilhaft sein kann.

Auch Oxydisuccinate und andere Derivate von Disuccinaten, vorzugsweise Ethylendiamindisuccinat sind weitere geeignete Co-Builder. Dabei wird Ethylendiamin-N,N'-disuccinat (EDDS) bevorzugt in Form der Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolithhaltigen und/oder silicathaltigen Formulierungen bei 3 bis 15 Gew.-%.

Weitere brauchbare organische Co-Builder sind beispielsweise acetylierte Hydroxycarbonsäuren bzw. deren Salze, welche gegebenenfalls auch in Lactonform vorliegen können und welche mindestens 4 Kohlenstoffatome und wenigstens eine Hydroxygruppe sowie maximal zwei Säuregruppen enthalten.

Eine weitere Substanzklasse mit Co-Builder-Eigenschaften stellen die Phosphonate dar. Dabei handelt es sich insbesondere um Hydroxyalkan- bzw. Aminoalkanphosphonate. Unter den Hydroalkanphosphonaten ist das 1-Hydroxyethan-1,1-diphosphonat (HEDP) von besonderer Bedeutung als Co-Builder. Es wird vorzugsweise als Natriumsalz eingesetzt, wobei das Dinatriumsalz neutral und das Tetranatriumsalz alkalisch (pH = 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutralreagierenden Natriumsalze, z.B. als Hexanatriumsalz der EDTMP bzw. als Hepta- und Octanatriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die erfindungsgemäßen tensidhaltigen Zubereitungen auch Bleiche enthalten, bevorzugt sein, Aminoalkanphosphonate, insbesondere DTPMP, einzusetzen oder Mischungen aus den genannten Phosphonaten zu verwenden.

Darüber hinaus können alle Verbindungen, die in der Lage sind, Komplexe mit Erdalkalimetallionen zu bilden, als Co-Builder eingesetzt werden.

Unter den als Bleichmittel dienenden, in Wasser H₂O₂ liefernden Verbindungen haben das Natriumperborat-tetrahydrat und das Natriumperborat-monohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Werden Reinigungs- oder Bleichmittel-Zubereitungen für das maschinelle Geschirrspülen hergestellt, so können auch Bleichmittel aus der Gruppe der organischen Bleichmittel eingesetzt werden. Typische organische Bleichmittel sind die Diacylperoxide, wie z.B. Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind (a) die Peroxybenzoesäure und ihre ringsubstituierten Derivate, wie Alkylperoxybenzoesäuren, aber auch Peroxy-α-Naphtoesäure und Magnesiummonoperphthalat; (b) die aliphatischen oder substituiert aliphatischen Peroxysäuren, wie Peroxylaurinsäure, Peroxystearinsäure, ε-Phthalimidoperoxy-capronsäure [Phthaloiminoperoxyhexansäure (PAP)], o-Carboxybenzamido-peroxycapronsäure, N-Nonenylamidoperadipinsäure und N-Nonenylamidoper-succinate; und (c) aliphatische und araliphatische Peroxydicarbonsäuren, wie 1,12-Diperoxycarbonsäure, 1,9-Diperoxyazelainsäure, Diperocysebacinsäure, Diperoxybrassylsäure, die Diperoxyphthalsäuren, 2-Decyldiperoxybutan-1,4-disäure, N,N-Terephthaloyl-di(6-aminopercapronsäue) können eingesetzt werden.

Um beim Waschen oder Reinigen bei Temperaturen von 60 °C und darunter eine verbesserte Bleichwirkung zu erreichen, können Bleichaktivatoren in die tensidhaltigen Zubereitungen eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n-bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können auch sogenannte Bleichkatalysatoren in die tensidhaltigen Zubereitungen eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren verwendbar.

Als Enzyme kommen solche aus der Klasse der Proteasen, Lipasen, Amylasen, Cellulasen bzw. deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase oder Protease und Cellulase oder aus Cellulase und Lipase oder aus Protease, Amylase und Lipase oder Protease, Lipase und Cellulase, insbesondere jedoch Cellulase-haltige Mischungen von besonderem Interesse. Auch Peroxidasen oder Oxidasen haben sich in einigen Fällen als geeignet erwiesen. Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate in den erfindungsgemäßen tensidhaltigen Zubereitungen kann beispielsweise etwa 0,1 bis 5 Gew.-%, vorzugsweise 0,1 bis etwa 2 Gew.-%, betragen.

Eine bevorzugte Gruppe geeigneter Additive sind optische Aufheller. Verwendet werden können hier die in Waschmitteln üblichen optischen Aufheller. Beispiele für optische Aufheller sind Derivate von Diaminostilbendisulfonsäure bzw. deren Alkalimetallsalze. Geeignet sind z. B. Salze der 4, 4'-Bis(2-anilino-4-morpholino1,3,5-triazinyl-6-amino-)stilben-2,2`-disulfonsäure oder gleichartig aufgebaute Verbindungen, die anstelle der Morpholino-Gruppe eine Diethanol-amino-Gruppe, eine Methylamino-Gruppe, eine Anilino-Gruppe oder eine 2-Methoxyethylamino-Gruppe tragen. Weiterhin können Aufheller vom Typ der substituierten Diphenylstyryle in den Teil-Portionen (waschaktiven Zubereitungen) der erfindungsgemäßen tensidhaltigen Zubereitungen enthalten sein, z. B. die Alkalisalze des 4,4'-Bis(2-sulfostyryl-)diphenyls, 4,4'-Bis(4-chlor-3-sulfostyryl-)diphenyls oder 4-(4-Chlorstyryl-)4'-(2-sulfostyryl-)diphenyls. Auch Gemische der vorgenannten Aufhel-ler können verwendet werden.

Eine weitere erfindungsgemäß bevorzugte Gruppe von Additiven sind UV-Schutz-Substanzen. UV-Absorber können auf die behandelten Textilien aufziehen und die Lichtbeständigkeit der Fasern und/oder die Lichtbeständigkeit des sonstiger Rezepturbestandteile verbessern. Unter UV-Absorber sind organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. Verbindungen, die diese gewünschten Eigenschaften aufweisen, sind beispielsweise die durch strahlungslose Desaktivierung wirksamen Verbindungen und Derivate des Benzophenons mit Substituenten in 2-und/oder 4-Stellung. Weiterhin sind auch substituierte Benzotriazole, wie beispielsweise das wasserlösliche Benzolsulfonsäure-3-(2H-benzotriazol-2-yl)-4-hydroxy-5-(methylpropyl)-mononatriumsalz (Cibafast^{®} H), in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet. Besondere Bedeutung haben Biphenyl- und vor allem Stilbenderivate wie sie beispielsweise in der EP 0728749 A beschrieben werden und kommerziell als Tinosorb^{®} FD oder Tinosorb^{®} FR ex Ciba erhältlich sind. Als UV-B-Absorber sind zu nennen 3-Benzylidencampher bzw. 3-Benzylidennorcampher und dessen Derivate, z.B. 3-(4-Methylbenzyliden)campher, wie in der EP 0693471 B1 beschrieben; 4-Aminobenzoesäurederivate, vorzugsweise 4-(Dimethylamino)benzoesäure-2-ethylhexylester, 4-(Dimethylamino)benzoesäure-2-octylester und 4-(Dimethylamino)benzoesäureamylester; Ester der Zimtsäure, vorzugsweise 4-Methoxyzimtsäure-2-ethylhexylester, 4-Methoxyzimtsäurepropylester, 4-Methoxyzimtsäureisoamylester, 2-Cyano-3,3-phenylzimtsäure-2-ethylhexylester (Octocrylene); Ester der Salicylsäure, vorzugsweise Salicylsäure-2-ethylhexylester, Salicylsäure-4-isopropylbenzylester, Salicylsäurehomomenthy-lester; Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon; Ester der Benzalmalonsäure, vorzugsweise 4-Methoxybenzmalonsäuredi-2-ethylhexylester; Triazinderivate, wie z.B. 2,4,6-Trianilino-(p-carbo-2'-ethyl-1'-hexyloxy)-1,3,5-triazin und Octyl Triazon, wie in der EP 0818450 A1 beschrieben oder Dioctyl Butamido Triazone (Uvasorb® HEB); Propan-1,3-dione, wie z.B. 1-(4-tert.Butylphenyl)-3-(4'methoxyphenyl)propan-1,3-dion; Ketotricyclo(5.2.1.0)decan-Derivate, wie in der EP 0694521 B1 beschrieben. Weiterhin geeignet sind 2-Phenylbenzimidazol-5-sulfonsäure und deren Alkali-, Erdalkali-, Ammonium-, Alkylammonium-, Alkanolammonium- und Glucammoniumsalze; Sulfonsäurederivate von Benzophenonen, vorzugsweise 2-Hydroxy-4-methoxybenzophenon-5-sulfonsäure und ihre Salze; Sulfonsäurederivate des 3-Benzylidencamphers, wie z.B. 4-(2-Oxo-3-bornylidenmethyl)benzol-sulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol 1789), 1-Phenyl-3-(4'-isopropylphenyl)-propan-1,3-dion sowie Enaminverbindungen, wie beschrieben in der DE 19712033 A1 (BASF). Die UV-A und UV-B-Filter können selbstverständlich auch in Mischungen eingesetzt werden. Neben den genannten löslichen Stoffen kommen für diesen Zweck auch unlösliche Lichtschutzpigmente, nämlich feindisperse, vorzugsweise nanoisierte Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente bereits für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, es können jedoch auch solche Partikel zum Einsatz kommen, die eine ellipsoide oder in sonstiger Weise von der sphärischen Gestalt abweichende Form besitzen. Die Pigmente können auch oberflächenbehandelt, d.h. hydrophilisiert oder hydrophobiert vorliegen. Typische Beispiele sind gecoatete Titandioxide, wie z.B. Titandioxid T 805 (Degussa) oder Eusolex® T2000 (Merck). Als hydrophobe Coatingmittel kommen dabei vor allem Silicone und dabei speziell Trialkoxyoctylsilane oder Simethicone in Frage. Vorzugsweise wird mikronisiertes Zinkoxid verwendet. Weitere geeignete UV-Lichtschutzfilter sind der Übersicht von P.Finkel in SÖFW-Journal 122, 543 (1996) zu entnehmen.

Die UV-Absorber werden üblicherweise in Mengen von 0,01 Gew.-% bis 5 Gew.-%, vorzugsweise von 0,03 Gew.-% bis 1 Gew.-%, eingesetzt.

Eine weitere erfindungsgemäß bevorzugte Gruppe von Additiven sind Farbstoffe, insbesondere wasserlösliche oder wasserdispergierbare Farbstoffe. Bevorzugt sind hier Farbstoffe, wie sie zur Verbesserung der optischen Produktanmutung in Wasch-, Spül-, Reinigungs- und Aviviermitteln üblicherweise eingesetzt werden. Die Auswahl derartiger Farbstoffe bereitet dem Fachmann keine Schwierigkeiten, insbesondere da derartige übliche Farbstoffe eine hohe Lagerstabilität und Unempfindlichkeit gegenüber den übrigen Inhaltsstoffen der waschaktiven Zubereitungen und gegen Licht sowie keine ausgeprägte Substantivität gegenüber Textilfasern haben, um diese nicht anzufärben. Die Farbstoffe sind erfindungsgemäß in den Wasch- und/oder Reinigungsmitteln gemäß der Erfindung in Mengen von unter 0,01 Gew.-% zugegen.

Eine weitere Klasse von Additiven, die erfindungsgemäß den Wasch- und/oder Reinigungsmitteln zugesetzt werden kann, sind Polymere. Unter diesen Polymeren kommen zum einen Polymere in Frage, die beim Waschen oder Reinigen bzw. Spülen Cobuilder-Eigenschaften zeigen, also zum Beispiel Polyacrylsäuren, auch modifizierte Polyacrylsäuren oder entsprechende Copolymere. Eine weitere Gruppe von Polymeren sind Polyvinylpyrrolidon und andere Vergrauungsinhibitoren, wie Copolymere von Polyvinylpyrrolidon, Cellulose-Ether und dergleichen. Weiterhin kommen als Polymere bevorzugt auch sogenannte Soil Repellents in Frage, wie sie nachfolgend im einzelnen beschrieben werden.

Als weitere erfindungsgemäße Zusätze können die Wasch- und Reinigungsmittel auch sog. Soil Repellents enthalten, also Polymere, die auf Fasern aufziehen, die Öl- und Fettauswaschbarkeit aus Textilien positiv beeinflussen und damit einer Wiederanschmutzung gezielt entgegenwirken. Dieser Effekt wird besonders deutlich, wenn ein Textil verschmutzt wird, das bereits vorher mehrfach mit einem erfindungsgemäßen Wasch- oder Reinigungsmittel, das diese öl- und fettlösende Komponente enthält, gewaschen wurde. Zu den bevorzugten öl- und fettlösenden Komponenten zählen beispielsweise nichtionische Celluloseether wie Methylcellulose und Methylhydroxypropylcellulose mit einem Anteil an Methoxy-Gruppen von 15 bis 30 Gew.-% und an Hydroxypropoxy-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglykolterephthalaten oder anionisch und/oder nichtionisch modifizierten Derivaten von diesen. Besonders bevorzugt von diesen sind die sulfonierten Derivate der Phthalsäure- und der Terephthalsäure-Polymere.

Insbesondere wenn es sich um flüssige oder gelförmige Zubereitungen handelt, können diese auch Lösungsmittel enthalten. Beispiele für geeignete Lösungsmittel sind ein- oder mehrwertige Alkohole mit 1 bis 4 C-Atomen. Bevorzugte Alkohole sind Ethanol, 1,2-Propandiol, Glycerin sowie deren beliebigen Gemische. Die Lösungsmittel können in flüssigen Zubereitungen in einer Menge von 2 bis 12 Gew.-%, insbesondere zwischen etwa 1 und 5 Gew.-%., bezogen auf die fertige Zubereitung, enthalten sein.

Die genannten Additive werden den Wasch- und/oder Reinigungsmitteln in Mengen bis höchstens 30 Gew.-%, vorzugsweise 2 bis 20 Gew.-%, zugesetzt.

Nach einer besonderen Ausführungsform sind insbesondere flüssige oder feste Waschmittel bevorzugt. Ebenfalls besonders bevorzugt sind Wasch- und Reinigungsmittel, die für die Feinwäsche bzw. schonende Behandlung von empfindlichen Textilien geeignet sind.

Diese Aufzählung von Wasch- und Reinigungsmittelinhaltsstoffen, die in den erfindungsgemäßen Wasch-, Spül- oder Reinigungsmittel vorkommen können, ist keineswegs abschließend, sondern gibt lediglich die wesentlichen typischen Inhalts-stoffe derartiger Mittel wieder. Insbesondere können, soweit es sich um flüssige oder gelförmige Zubereitungen handelt, in den Mitteln auch organische Lösungsmittel enthalten sein. Vorzugsweise handelt es sich um ein- oder mehrwertige Alkohole mit 1 bis 4 C-Atomen. Bevorzugte Alkohole in solchen Mitteln sind Ethanol, 1,2-Propandiol, Glycerin sowie Gemische aus diesen Alkoholen. In bevorzugten Ausführungsformen enthalten derartige Mittel 2 bis 12 Gew.-% solcher Alkohole. Ein insgesamt besonders günstiges Ergebnis bei Reinigungsmitteln für harte O-berflächen wird dann erhalten, wenn das Gewichtsverhältnis von Tensid zu Alkohol in der Lösung zwischen etwa 1:1,5 und etwa 2 : 1 liegt.

Insbesondere bevorzugt sind ebenfalls Reinigungsmittel für harte Oberflächen, die in schäumender oder nicht schäumender Form auf die Oberflächen aufgebracht werden können. Vorteilhafter weise kann so die Verbreitung von Schimmelsporen in der Raumluft und die Ausbreitung von Verfärbungen, die auf Schimmelsporen zurückzuführen sind, in feuchten Räumen vermindert bzw. verhindert werden.

Neben den genannten Bestandteilen können die erfindungsgemäß verwendeten wäßrigen Flüssigkeiten weitere Wirk- und Zusatzstoffe, wie sie in Reinigern für harte Oberflächen üblich sind, in geringen Mengen enthalten. Beispiele derartiger Wirkstoffe sind kalklösende organische Säuren, wie Zitronensäure, Essigsäure oder Milchsäure oder deren wasserlösliche Salze, die vorzugsweise in Mengen von 2 bis 6 Gew.-%, bezogen auf die gesamte wäßrige Flüssigkeit, in dieser enthalten sind.

Es kann bevorzugt sein, ein Reinigungsmittel zu verwenden, dass als Schaum auf die zu reinigende Oberfläche aufgebracht wird und dadurch dort länger verbleibt. Die Reinigungswirkung kann so noch deutlich erhöht werden. Die Schaumerzeugung geschieht vorzugsweise unmittelbar beim Austritt der Flüssigkeit aus den Sprühgeräten. Bei den Handsprühpumpen wird dies durch eine besondere Gestaltung des Sprühkopfes erreicht, die dafür sorgt, daß die aus der Sprühdüse austretende wäßrige Flüssigkeit mit Luft so stark vermengt wird, daß die Flüssigkeit auf der Oberfläche bereits als Schaum auftrifft. Entsprechend gestaltete Sprühpumpen sind handelsüblich. Bei Anwendung als Aerosol muß durch geeignete Gestaltung der Sprühmechanik unter Berücksichtigung der Zusammensetzung der Reinigungsflüssigkeit dafür gesorgt werden, daß zusammen mit der Flüssigkeit stets ausreichende Mengen an Treibgas austreten, die dann zum Aufschäumen der Flüssigkeit führen. Gegebenenfalls muß vor Anwendung geschüttelt werden. Die entsprechende Gestaltung von Aerosolbehälter, Ansaugstutzen und Ventil gehört zu den Routinetätigkeiten des Fachmanns und soll deshalb hier nicht näher erläutert werden. Die im Verlaufe des Reinigungsverfahrens auf die zu reinigende Fläche aufgesprühte Flüssigkeitsmenge beträgt meist zwischen etwa 10 g und etwa 60 g/m²; insbesondere 20 g bis 40g/m². Der Schaum wird zweckmäßigerweise möglichst gleichmäßig über die zu reinigende Fläche verteilt und kann dann seine Reinigungswirkung selbsttätig entfalten. Vorzugsweise werden die Flächen aber anschließend mit einem angefeuchteten Tuch oder einem Schwamm nachgewischt, wobei bei größeren Flächen Tuch bzw. Schwamm von Zeit zu Zeit mit klarem Wasser ausgespült werden. Die behandelten Flächen können selbstver-ständlich auch mit Wasser nachgespült werden, doch ist dies im allgemeinen nicht erforderlich, da die verbleibenden Reinigungsmittelrückstände vollkommen transparent auftrocknen und praktisch unsichtbar bleiben.

Die folgenden Beispiel sollen die Erfindung erläutern, ohne sie jedoch darauf einzuschränken.

### Beispiele:

### Beispiel 1-3:

### Auswirkung von Duftalkohol-Kieselsäureestern auf die Sporulation von Aspergillus niger

Kontamination der Oberfläche von Würzeagarplatten mit je 100 µl einer Keimsuspension (10 ³ KBE/ml) von *Aspergillus niger* (DSM1988). Den Agarplatten wurden zuvor unterschiedliche Mengen Wirkstoff (Lösungen in Ethanol, Endkonzentrationen in Gew.-% siehe Tabelle) beigefügt. Die Platten wurden 3 Tage bei 25 °C inkubiert. Die Sporenbildung wurde visuell beurteilt und die Sporulationsrate in [%] bestimmt. Alle eingesetzten Wirkstoffkonzentrationen behinderten das Wachstum des Prüfstamms nicht.

**Tabelle 1: Farnesol-Kieselsäureester**

| | | | | | | |
|---|---|---|---|---|---|---|
| Konzentration Farnesol-Kieselsäureester [Gew.-%] | 0 | 0,001 | 0,01 | 0,1 | 0,5 | 1,0 |
| Sporulation [%] | 100 | 100 | 50 | 20 | 5 | 0 |

Die Sporenbildung wurde mit steigenden Konzentrationen gehemmt und bei 1,0 Gew.-% vollständig unterdrückt.

**Tabelle 2: Geraniol-Kieselsäureester**

| | | | |
|---|---|---|---|
| Konzentration Geraniol-Kieselsäureester [Gew.-%] | 0 | 0,001 | 0,01 |
| Sporulation [%] | 100 | 100 | 30 |

Die Sporenbildung wurde mit steigenden Konzentrationen gehemmt und bei 0,1 Gew.-% zu 70 % unterdrückt.

**Tabelle 3: Eugenol-Kieselsäureester**

| | | | | |
|---|---|---|---|---|
| Konzentration Eugenol-Kieselsäureester [%] | 0 | 0,005 | 0,01 | 0,05 |
| Sporulation [%] | 100 | 85 | 60 | 0 |

Die Sporenbildung wurde mit steigenden Konzentrationen gehemmt und bei 0,05 Gew.-% Einsatzkonzentration vollständig unterdrückt.

### Beispiel 4:

### Beladung des Calixarens mit Farnesol:

Das Calixaren (p-tert.Butylcalixarene, p-tertButylcalixarenkaliumacetat oder Calixaren-p-sulfonate, gemäß Formel VIII mit n=6, R¹=tert.Butyl, R²=H) wird in einem Kolben vorgelegt und die 10flache molare Menge an dem Duftstoffalkohol zugegeben. Die Suspension wird anschließend für zwei Tage bei Raumtemperatur gerührt. Das so beladene Calixaren wird danach abfiltriert, zweimal mit wenig Pentan gewaschen und im Trockenschrank bei 45°C getrocknet. Die verkapselte Menge an dem Reaktivstoff kann dann durch Rückwiegen bestimmt werden.

### Auswirkung von Farnesol-Calixaren auf die Sporulation von Aspergillus niger

Kontamination der Oberfläche von Würzeagarplatten mit je 100 µl einer Keimsuspension (10 ³ KBE/ml) von *Aspergillus niger* (DSM1988). Den Agarplatten wurden zuvor unterschiedliche Mengen Wirkstoff (Lösungen in Ethanol, Endkonzentrationen siehe Tabelle) beigefügt. Die Platten wurden 3 Tage bei 25 °C inkubiert. Die Sporenbildung wurde visuell beurteilt und die Sporulationsrate in [%] bestimmt. Alle eingesetzten Wirkstoffkonzentrationen behinderten das Wachstum des Prüfstamms nicht.

**Tabelle 4:**

| | | | | | | | |
|---|---|---|---|---|---|---|---|
| Konzentration p-tertButylcalix[6]arene zu 50 % beladen mit Farnesol [Gew.-%] | 0 | 0,001 | 0,005 | 0,01 | 0,05 | 0,1 | 0,5 |
| Sporulation [%] | 100 | 95 | 95 | 95 | 40 | 15 | 0 |

Die Sporulation wurde bei einer Konzentration von 0,5 Gew.-% von p-tertButyl-calix[6]aren, welches zu 50 % mit Farnesol beladen war, vollständig gehemmt.

### Beispiele 5 bis 7: Tapetenklebstoffe

### Beispiel 5:

| **Inhaltsstoffe** | **Menge** |
|---|---|
| Methylhydroxyethylcellulose (300 m • Pas in 2 %iger wässriger Lösung, Methoxyl-gehalt 26 %) | 500 g |
| PVAcetat-Redispersionspulver | 350 g |
| Kaolin | 60 g |
| Cellulosepulver | 50 g |
| Additionsprodukt von 6 Mol Ethylenoxid an 1 Mol Nonylphenol | 10g |
| Handelsüblicher Konservierungsstoff (Basis Isothiazolinderivat) | 8 g |
| Farnesol-Kieselsäureester | 0,2 g |

### Beispiel 6

| **Inhaltsstoffe** | **Menge** |
|---|---|
| Methylhydroxyethylcellulose (5000 m • Pas in 2 % wässrige Lösung, Methoxyl-gehalt 19 %) | 680 g |
| Carboxylmethylstärke (DS 0,22) | 300 g |
| Additionsprodukt von 4 Mol Ethylenoxid an 1 Mol Fettalkohol | 15g |
| Handelsüblicher Konservierungsstoff (Basis Isothialzolinderivat) | 10g |
| Farnesol-Kieselsäureester | 0,2 g |

### Beispiel 7

| **Inhaltsstoffe** | **Menge** |
|---|---|
| Handelsübliche Polyvinylacetatdispersionenen (50 % Feststoffgehalt) | 500 g |
| Wasser | 200 g |
| Methylhydroxyethylcellulose (3000 m • Pas in 2 % wässriger Lösung) | 20 g |
| Handelsübliches Konservierungsmittel | 10 g |
| Geraniol-Kieselsäureester | 0,2 g |

Die erhaltenen Mischungen werden mit Wasser im Verhältnis 1:20 (2) oder 1:25 (3) oder 1:1 (4) angerührt und zum Aufkleben von handelsüblichen Tapeten auf Wandflächen benutzt.

### Beispiel 8: Flüssigwaschmittel

| **Rohstoff** | Menge in Gewichtsprozent |
|---|---|
| C₁₂-C₁₈ Fettalkohol + 7 EO (Dehydol LT 7, Cognis) | 15 |
| C₁₂-C₁₄ Fettalkohol + 2 EO-sulfat, Natriumsalz (Texapon N 70, Cognis) | 7 |
| C₈₋₁₈ -Fettsäure geschnitten (Kokosölfettsäure, Edenor K12-18, Cognis) | 8 |
| Natriumcitrat | 1,5 |
| Enzyme | + |
| Farbstoff | + |
| Parfüm | + |
| Farnesol-Kieselsäureester | 0,5 |
| Wasser | Ad 100 |

## Patentansprüche

1. Verwendung von Stoffen, die Terpene und/oder Duftstoffalkohole freisetzen, zur Hemmung der asexuellen Vermehrung von Pilzen,
**dadurch gekennzeichnet, dass** die Stoffe, die Terpene und/oder Duftstoffalkohole freisetzen, ausgewählt sind aus der Gruppe bestehend aus:
a) Kieselsäureestern von Duftstoffalkoholen und/oder Terpenen,
b) Estern von Terpenalkoholen und/oder Duftstoffalkoholen mit Polymeren,
c) Polymeren, die durch Umsetzung von Terpenalkoholen und/oder Duftstoffalkoholen mit Monomeren oder Polymeren, die Isocyanatgruppen tragen, entstehen oder
d) Calixarenen, die mit Terpenen und/oder Duftstoffalkoholen beladen sind.

2. Verwendung nach Anspruch 1, **dadurch gekennzeichnet, dass** die asexuelle Vermehrung von Pilzen gehemmt wird, die ausgewählt sind unter humanpathogenen Pilzen.

3. Verwendung nach Anspruch 2, **dadurch gekennzeichnet, dass** die asexuelle Vermehrung von Pilzen gehemmt wird, die ausgewählt sind unter allen Spezies der Gattung *Aspergillus.*

4. Verwendung nach einem der vorhergehenden Ansprüche, **dadurch gekennzeichnet, dass** die freizusetzenden Terpene ausgewählt sind aus Mono-, Sesqui- und/oder Diterpenen.

5. Verwendung nach Anspruch 4, **dadurch gekennzeichnet, dass** die freizusetzenden Mono-, Sesqui- und/oder Diterpene ausgewählt sind aus Geraniol, Farnesol, Squalen, Patchoulialkohol und Linalylacetat.

6. Verwendung nach einem der Ansprüche 1 bis 3, **dadurch gekennzeichnet, dass** die freizusetzenden Terpene ausgewählt sind aus Terpenalkoholen.

7. Verwendung nach einem der Ansprüche 1 bis 3, **dadurch gekennzeichnet, dass** die freizusetzenden Duftstoffalkohole ausgewählt sind aus Eugenol, Zimtalkohol und Anethol.

8. Verwendung nach Anspruch 1, **dadurch gekennzeichnet, dass** Kieselsäureester gemäß einer der Formeln (I) oder (II) und/oder deren Mischungen eingesetzt werden, 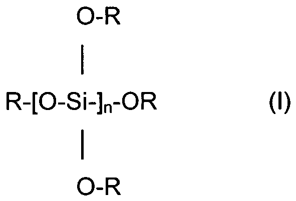 und 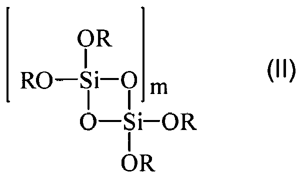 wobei mindestens ein R ausgewählt ist aus der Gruppe gebildet aus Terpenalkoholresten und Duftstoffalkoholresten, und alle anderen R unabhängig voneinander ausgewählt sind aus der Gruppe, die H, die geradkettigen oder verzweigten, gesättigten oder ungesättigten, substituierten oder unsubstituierten C₁₋₆-Kohlenwasserstoffreste, die Terpenalkoholreste, die Duftstoffalkoholreste sowie Polymere enthält, und m Werte aus dem Bereich 1 bis 20 und n Werte aus dem Bereich 1 bis 100 annimmt.

9. Verwendung nach Anspruch 8, **dadurch gekennzeichnet, dass** n Werte zwischen 1 und 15 annimmt.

10. Verwendung nach einem der Ansprüche 8 oder 9, **dadurch gekennzeichnet, dass** mindestens zwei oder drei Reste R ausgewählt sind aus der Gruppe der Terpenalkoholreste und/oder Duftstoffalkoholreste.

11. Verwendung nach einem der Ansprüche 8 bis 10, **dadurch gekennzeichnet, dass** die C₁₋₆-Kohtenwasserstoffreste unabhängig voneinander ausgewählt sind aus der Gruppe Methyl, Ethyl, *n*-Propyl, iso-Propyl, *n*-Butyl, iso-Butyl und *tert*-Butyl.

12. Verwendung nach einem der Ansprüche 8 bis 11, **dadurch gekennzeichnet, dass** der oder die Polymerrest(e) ausgewählt sind aus Polyvinylalkohol, Polyolen und Polyphenolen.

13. Verwendung nach Anspruch 1, **dadurch gekennzeichnet, dass** die Polymere funktionelle Gruppen tragen, die ausgewählt sind aus Säuregruppen, Säurechloridgruppen, Estergruppen, primären, sekundären und tertiären Amidgruppen.

14. Verwendung nach einem der Ansprüche 1 oder 13, **dadurch gekennzeichnet, dass** die Polymere ausgewählt sind aus Polyacrylsäure, Polymethacrylsäure Polyacrylsäureestern, Polymethacrylsäureestern und Polyacrylamiden.

15. Verwendung nach Anspruch 1, **dadurch gekennzeichnet, dass** die Monomere ausgewählt sind aus aliphatischen oder aromatischen Isocyanaten, insbesondere Diiso- oder Triisocyanaten.

16. Verwendung nach Anspruch 15, **dadurch gekennzeichnet, dass** die Isocyanate ausgewählt sind aus Toluendiisocyanat, Hexamethylendiisocyanat und meta-Tetramethylxylylendiisocyanat.

17. Verwendung nach einem der vorhergehenden Ansprüche, **dadurch gekennzeichnet, dass** die Terpene und/oder Duftstoffalkohole in nicht fungizid oder fungistatisch wirkenden Endkonzentrationen freigesetzt werden.

18. Verwendung nach einem der vorhergehenden Ansprüche, **dadurch gekennzeichnet, dass** die Stoffe, die Terpene und/oder Duftstoffalkohole freisetzen, zu 0,000001 bis 50 Gew.-% eingesetzt werden.

19. Verwendung nach einem der vorhergehenden Ansprüche, **dadurch gekennzeichnet, dass** die Stoffe, Terpene und/oder Duftstoffalkohole freisetzen, in Zubereitungen eingesetzt werden, die ausgewählt sind unter Waschmitteln, Reinigungsmitteln, Nachspülmitteln, Handwaschmitteln Handgeschirrspülmitteln, Maschinengeschirrspülmitteln, und Mitteln zur Ausrüstung von Filtermedien, Klebstoffen, Baustoffen, Bauhilfsstoffen, Textilien, Pelzen, Papier, Fellen oder Leder.

20. Verwendung nach einem der vorhergehenden Ansprüche, **dadurch gekennzeichnet, dass** die asexuelle Vermehrung von Pilzen in oder auf Textilien, Keramiken, Metallen, Filtermedien, Baustoffen, Bauhilfsstoffen, Pelzen, Papier, Fellen, Leder und/oder Kunststoffen gehemmt wird.

21. Waschmittel, Reinigungsmittel, Nachspülmittel, Handwaschmittel, Handgeschirrspülmitteln, Maschinengeschirrspülmittel, und Mittel zur Ausrüstung von Filtermedien, Baustoffen, Bauhilfsstoffen, Textilien, Pelzen, Papier, Fellen oder Leder, enthaltend Stoffe, die Terpene und/oder Duftstoffalkohole freisetzen, zur Hemmung der asexuellen Vermehrung von Pilzen, **dadurch gekennzeichnet, dass** die Stoffe, die Terpene und/oder Duftstoffalkohole freisetzen, ausgewählt sind aus der Gruppe bestehend aus
a) Kieselsäureestern von Duftstoffalkoholen und/oder Terpenen,
b) Estern von Terpenalkoholen und/oder Duftstoffalkoholen mit Polymeren und
c) Polymeren, die durch Umsetzung von Terpenalkoholen und/oder Duftstoffalkoholen mit Monomeren oder Polymeren, die Isocyanatgruppen tragen, entstehen.

22. Filtermedien, Baustoffe, Bauhilfsstoffe, Textilien, Pelze, Papier, Felle oder Leder, ausgerüstet mit einem Mittel gemäß Anspruch 21.

23. Wasch- und/oder Reinigungsmittel nach Anspruch 21, enthaltend 0,000001 bis 5 Gew.-% Stoffe, die Terpene und/oder Duftstoffalkohole freisetzen, zur Hemmung der asexuellen Vermehrung von Pilzen, **dadurch gekennzeichnet, dass** die Stoffe, die Terpene und/oder Duftstoffalkohole freisetzen, ausgewählt sind aus der Gruppe bestehend aus
a) Kieselsäureestern von Duftstoffalkoholen und/oder Terpenen,
b) Estern von Terpenalkoholen und/oder Duftstoffalkoholen mit Polymeren,
c) Polymeren, die durch Umsetzung von Terpenalkoholen und/oder Duftstoffalkoholen mit Monomeren oder Polymeren, die Isocyanatgruppen tragen, entstehen.

24. Wasch- und/oder Reinigungsmittel nach Anspruch 23, **dadurch gekennzeichnet, dass** es sich um flüssige oder feste Waschmittel handelt.

25. Wasch- und/oder Reinigungsmittel nach Anspruch 24, **dadurch gekennzeichnet, dass** es sich um ein Reinigungsmittel für harte Oberflächen handelt.

26. Klebstoff, enthaltend 0,000001 bis 5 Gew.-% an Stoffen, die Terpene und/oder Duftstoffalkohole freisetzen, zur Hemmung der asexuellen Vermehrung von Pilzen, **dadurch gekennzeichnet, dass** die Stoffe, die Terpene und/oder Duftstoffalkohole freisetzen, ausgewählt sind aus der Gruppe bestehend aus
a) Kieselsäureestern von Duftstoffalkoholen und/oder Terpenen,
b) Estern von Terpenalkoholen und/oder Duftstoffalkoholen mit Polymeren,
c) Polymeren, die durch Umsetzung von Terpenalkoholen und/oder Duftstoffalkoholen mit Monomeren oder Polymeren, die Isocyanatgruppen tragen, entstehen oder
d) Calixarenen, die mit Terpenen und/oder Duftstoffalkoholen beladen sind.

27. Klebstoff nach Anspruch 26, **dadurch gekennzeichnet, dass** es sich um einen Klebstoff auf Wasserbasis handelt.

28. Klebstoff nach Anspruch 26 oder 27, **dadurch gekennzeichnet, dass** es sich um einen Klebstoff zur Befestigung von Tapeten und ähnlichen Wandbelagsstoffen handelt.

29. Dichtungsmasse, enthaltend Stoffe, die Terpene und/oder Duftstoffalkohole freisetzen, zur Hemmung der asexuellen Vermehrung von Pilzen, **dadurch gekennzeichnet, dass** die Stoffe, die Terpene und/oder Duftstoffalkohole freisetzen, ausgewählt sind aus der Gruppe bestehend aus
a) Kieselsäureestern von Duftstoffalkoholen und/oder Terpenen,
b) Estern von Terpenalkoholen und/oder Duftstoffalkoholen mit Polymeren,
c) Polymeren, die durch Umsetzung von Terpenalkoholen und/oder Duftstoffalkoholen mit Monomeren oder Polymeren, die Isocyanatgruppen tragen, entstehen oder
d) Calixarenen, die mit Terpenen und/oder Duftstoffalkoholen beladen sind.

30. Dichtungsmasse gemäß Anspruch 29, **dadurch gekennzeichnet, dass** es sich um eine Fugendichtmasse handelt.

## Claims

1. Use of substances which release terpenes and/or fragrance alcohols for inhibiting the asexual reproduction of fungi,
**characterized in that** the substances which release terpenes and/or fragrance alcohols are selected from the group comprising:
a) silicic acid esters of fragrance alcohols and/or terpenes,
b) esters of terpene alcohols and/or fragrance alcohols with polymers,
c) polymers which are produced by reacting terpene alcohols and/or fragrance alcohols with monomers or polymers bearing isocyanate groups, or
d) calixarenes which are loaded with terpenes and/or fragrance alcohols.

2. Use according to Claim 1, **characterized in that** the asexual reproduction of fungi which are selected from among human pathogenic fungi is inhibited.

3. Use according to Claim 2, **characterized in that** the asexual reproduction of fungi which are selected from among all species of the genus *Aspergillus* is inhibited.

4. Use according to one of the preceding claims, **characterized in that** the terpenes to be released are selected from monoterpenes, sesquiterpenes, and/or diterpenes.

5. Use according to Claim 4, **characterized in that** the monoterpenes, sesquiterpenes, and/or diterpenes to be released are selected from geraniol, farnesol, squalene, patchouli alcohol, and linalyl acetate.

6. Use according to one of Claims 1 to 3, **characterized in that** the terpenes to be released are selected from terpene alcohols.

7. Use according to one of Claims 1 to 3, **characterized in that** the fragrance alcohols to be released are selected from eugenol, cinnamyl alcohol, and anethole.

8. Use according to Claim 1, **characterized in that** silicic acid esters according to one of formulas (I) or (II) and/or mixtures thereof are used, 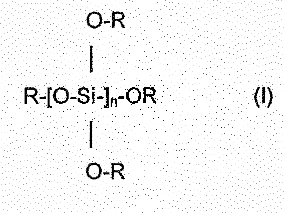 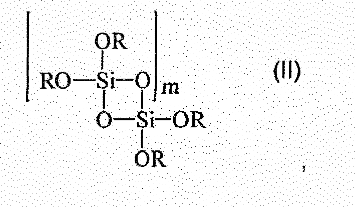 wherein at least one R is selected from the group comprising terpene alcohol radicals and fragrance alcohol radicals, and all other R are independently selected from the group containing H, straight-chain or branched, saturated or unsaturated, substituted or unsubstituted C₁₋₆ hydrocarbon radicals, terpene alcohol radicals, fragrance alcohol radicals, and polymers, and m assumes values in a range of 1 to 20 and n assumes values in a range of 1 to 100.

9. Use according to Claim 8, **characterized in that** n assumes values between 1 and 15.

10. Use according to one of Claims 8 or 9, **characterized in that** at least two or three radicals R are selected from the group of terpene alcohol radicals and/or fragrance alcohol radicals.

11. Use according to one of Claims 8 to 10, **characterized in that** the C₁₋₆ hydrocarbon radicals are independently selected from the group methyl, ethyl, n-propyl, isopropyl, n-butyl, isobutyl, and *tert-*butyl.

12. Use according to one of Claims 8 to 11, **characterized in that** the polymer radical(s) is/are selected from polyvinyl alcohol, polyols, and polyphenols.

13. Use according to Claim 1, **characterized in that** the polymers bear functional groups which are selected from acid groups, acid chloride groups, ester groups, and primary, secondary, and tertiary amide groups.

14. Use according to one of Claims 1 or 13, **characterized in that** the polymers are selected from polyacrylic acid, polymethacrylic acid, polyacrylic acid esters, polymethacrylic acid esters, and polyacrylamides.

15. Use according to Claim 1, **characterized in that** the monomers are selected from aliphatic or aromatic isocyanates, in particular diisocyanates or triisocyanates.

16. Use according to Claim 15, **characterized in that** the isocyanates are selected from toluene diisocyanate, hexamethylene diisocyanate, and *meta*-tetramethylxylylene diisocyanate.

17. Use according to one of the preceding claims, **characterized in that** the terpenes and/or fragrance alcohols are released in final concentrations which do not have a fungicidal or fungistatic action.

18. Use according to one of the preceding claims, **characterized in that** the substances which release terpenes and/or fragrance alcohols are used in quantities of 0.000001 to 50% by weight.

19. Use according to one of the preceding claims, **characterized in that** the substances which release terpenes and/or fragrance alcohols are used in preparations that are selected from among detergents, cleaning agents, rinsing agents, hand detergents, hand dishwashing detergents, dishwasher detergents, and agents for finishing filter media, adhesives, building materials, auxiliary building materials, textiles, furs, paper, hides, or leather.

20. Use according to one of the preceding claims, **characterized in that** the asexual reproduction of fungi in or on textiles, ceramics, metals, filter media, building materials, auxiliary building materials, furs, paper, hides, leather, and/or plastics is inhibited.

21. Detergents, cleaning agents, rinsing agents, hand detergents, hand dishwashing detergents, dishwasher detergents, and agents for finishing filter media, building materials, auxiliary building materials, textiles, furs, paper, hides, or leather, that contain substances which release terpenes and/or fragrance alcohols for inhibiting the asexual reproduction of fungi, **characterized in that** the substances which release terpenes and/or fragrance alcohols are selected from the group comprising
a) silicic acid esters of fragrance alcohols and/or terpenes,
b) esters of terpene alcohols and/or fragrance alcohols with polymers, and
c) polymers which are produced by reacting terpene alcohols and/or fragrance alcohols with monomers or polymers bearing isocyanate groups.

22. Filter media, building materials, auxiliary building materials, textiles, furs, paper, hides, or leather which is/are finished with an agent according to Claim 21.

23. Detergent and/or cleaning agent according to Claim 21, containing 0.000001 to 5% by weight of substances which release terpenes and/or fragrance alcohols for inhibiting the asexual reproduction of fungi, **characterized in that** the substances which release terpenes and/or fragrance alcohols are selected from the group comprising
a) silicic acid esters of fragrance alcohols and/or terpenes,
b) esters of terpene alcohols and/or fragrance alcohols with polymers,
c) polymers which are produced by reacting terpene alcohols and/or fragrance alcohols with monomers or polymers bearing isocyanate groups.

24. Detergent and/or cleaning agents according to Claim 23, **characterized in that** they are liquid or solid detergents.

25. Detergent and/or cleaning agents according to Claim 24, **characterized in that** they are cleaning agents for hard surfaces.

26. Adhesive containing 0.000001 to 5% by weight of substances which release terpenes and/or fragrance alcohols for inhibiting the asexual reproduction of fungi, **characterized in that** the substances which release terpenes and/or fragrance alcohols are selected from the group comprising
a) silicic acid esters of fragrance alcohols and/or terpenes,
b) esters of terpene alcohols and/or fragrance alcohols with polymers,
c) polymers which are produced by reacting terpene alcohols and/or fragrance alcohols with monomers or polymers bearing isocyanate groups, or
d) calixarenes which are loaded with terpenes and/or fragrance alcohols.

27. Adhesive according to Claim 26, **characterized in that** it is a water-based adhesive.

28. Adhesive according to Claim 26 or 27, **characterized in that** it is an adhesive for affixing wallpaper and similar wall covering materials.

29. Sealing compound containing substances which release terpenes and/or fragrance alcohols for inhibiting the asexual reproduction of fungi, **characterized in that** the substances which release terpenes and/or fragrance alcohols are selected from the group comprising
a) silicic acid esters of fragrance alcohols and/or terpenes,
b) esters of terpene alcohols and/or fragrance alcohols with polymers,
c) polymers which are produced by reacting terpene alcohols and/or fragrance alcohols with monomers or polymers bearing isocyanate groups, or
d) calixarenes which are loaded with terpenes and/or fragrance alcohols.

30. Sealing compound according to Claim 29, **characterized in that** it is a joint sealing compound.

## Revendications

1. Utilisation de substances qui libèrent des terpènes et/ou des alcools de substances odoriférantes pour inhiber la reproduction asexuée de champignons,
**caractérisée en ce que** les substances qui libèrent des terpènes et/ou des alcools de substances odoriférantes sont choisies dans le groupe constitué :
a) des esters d'acide silicique d'alcools de substances odoriférantes et/ou de terpènes,
b) des esters d'alcools terpéniques, et/ou d'alcools de substances odoriférantes comportant des polymères,
c) des polymères qui sont obtenus par réaction d'alcools terpéniques et/ou d'alcools de substances odoriférantes avec des monomères ou des polymères qui portent des groupes isocyanate ou
d) des calixarènes qui sont chargés de terpènes et/ou d'alcools de substances odoriférantes.

2. Utilisation selon la revendication 1, **caractérisée en ce que** l'on inhibe la reproduction asexuée de champignons qui sont choisis parmi les champignons pathogènes pour l'être humain.

3. Utilisation selon la revendication 2, **caractérisée en ce que** l'on inhibe la reproduction asexuée de champignons qui sont choisis parmi toutes les espèces du genre *Aspergillus.*

4. Utilisation selon l'une quelconque des revendications précédentes, **caractérisée en ce que** les terpènes qui doivent être libérés sont choisis parmi les mono-, sesqui- et/ou diterpènes.

5. Utilisation selon la revendication 4, **caractérisée en ce que** les mono-, sesqui- et/ou diterpènes qui doivent être libérés sont choisis parmi le géraniol, le farnésol, le squalène, l'alcool de patchouli et l'acétate de linalyle.

6. Utilisation selon l'une des revendications 1 à 3, **caractérisée en ce que** les terpènes qui doivent être libérés sont choisis parmi les alcools terpéniques.

7. Utilisation selon l'une des revendications 1 à 3, **caractérisée en ce que** les alcools de substances odoriférantes qui doivent être libérés sont choisis parmi l'eugénol, l'alcool cinnamique, et l'anéthole.

8. Utilisation selon la revendication 1, **caractérisée en ce que** l'on utilise les esters d'acide silicique selon l'une des formules (I) ou (II) et/ou leurs mélanges, 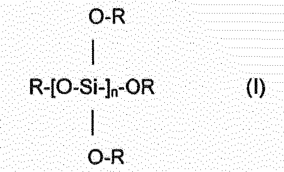 et 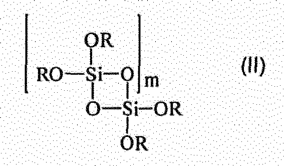 au moins un R étant choisi dans le groupe formé par les radicaux d'alcools terpéniques et les radicaux d'alcools de substances odoriférantes, et tous les autres R étant choisis indépendamment dans le groupe qui contient H, les radicaux hydrocarbonés en C₁ à C₆ linéaires ou ramifiés, saturés ou insaturés, substitués ou non substitués, les radicaux d'alcools terpéniques, les radicaux d'alcools de substances odoriférantes ainsi que les polymères et m prenant des valeurs dans la gamme de 1 à 20 et n prenant des valeurs dans la gamme de 1 à 100.

9. Utilisation selon la revendication 8, **caractérisée en ce que** n prend des valeurs entre 1 et 15.

10. Utilisation selon l'une des revendications 8 ou 9, **caractérisée en ce qu'**au moins deux ou trois radicaux R sont choisis dans le groupe des radicaux d'alcools terpéniques et/ou les radicaux d'alcool de substances odoriférantes.

11. Utilisation selon l'une des revendications 8 à 10, **caractérisée en ce que** les radicaux hydrocarbonés en C₁ à C₆ sont choisis indépendamment dans le groupe méthyle, éthyle, *n-*propyle, *iso*-propyle, *n*-butyle, *iso*-butyle et *tert*-butyle.

12. Utilisation selon l'une quelconque des revendications 8 à 11, **caractérisée en ce que** le radical polymère ou les radicaux polymères sont choisis parmi les alcools polyvinyliques, les polyols et les polyphénols.

13. Utilisation selon la revendication 1, **caractérisée en ce que** les polymères portent des groupes fonctionnels qui sont choisis dans le groupe des acides, le groupes des chlorures d'acyle, le groupe des esters, le groupe des amides primaires, secondaires et tertiaires.

14. Utilisation selon l'une quelconque des revendications 1 ou 13, **caractérisée en ce que** les polymères sont choisis parmi l'acide polyacrylique, l'acide polyméthacrylique, les esters d'acide polyacrylique, les esters d'acide polyméthacrylique et les polyacrylamides.

15. Utilisation selon la revendication 1, **caractérisée en ce que** les monomères sont choisis parmi les isocyanates aliphatiques ou aromatiques, en particulier les diisocyanates ou les triisocyanates.

16. Utilisation selon la revendication 15, **caractérisée en ce que** les isocyanates sont choisis parmi le diisocyanate de toluène, le diisocyanate d'hexaméthylène et le diisocyanate de méta-tétraméthylxylylène.

17. Utilisation selon l'une des revendications précédentes, **caractérisée en ce que** les terpènes et/ou les alcools de substances odoriférantes sont libérés à des concentrations finales non fongicides ou fongistatiques.

18. Utilisation selon l'une des revendications précédentes, **caractérisée en ce que** les substances, qui libèrent des terpènes et/ou des alcools de substances aromatiques, sont utilisées dans une quantité de 0,000001 à 50% en poids.

19. Utilisation selon l'une des revendications précédentes, **caractérisée en ce que** les substances, qui libèrent des terpènes et/ou des alcools de substances aromatiques, sont utilisées dans des préparations qui sont choisies parmi les agents de lavage, les agents de nettoyage, les agents de rinçage, les agents de lavage à la main, les agents de lavage de la vaisselle à la main, les agents de lavage de la vaisselle en machine, et les agents de traitement de milieux filtrants, les adhésifs, les matériaux de construction, les matériaux de construction auxiliaires, les textiles, les fourrures, le papier, les peaux ou les cuirs.

20. Utilisation selon l'une des revendications précédentes, **caractérisée en ce que** l'on inhibe la reproduction asexuée des champignons dans ou sur les textiles, les céramiques, les métaux, les milieux filtrants, les matériaux de construction, les matériaux de construction auxiliaires, les fourrures, le papier, les peaux, les cuirs et/ou les matières synthétiques.

21. Agent de lavage, agent de nettoyage, agent de rinçage, agent de lavage à la main, agent de lavage de la vaisselle à la main, agent de la lavage de la vaisselle en machine, et agent de traitement de milieux filtrants, de matériaux de construction, de matériaux de construction auxiliaires, de textiles, de fourrures, de papier, de peaux ou de cuirs contenant des substances qui libèrent des terpènes et/ou des alcools de substances odoriférantes pour inhiber la reproduction asexuée de champignons, **caractérisée en ce que** les substances, qui libèrent des terpènes et/ou des alcools de substances odoriférantes, sont choisies dans le groupe constitué
a) des esters d'acide silicique d'alcools de substances odoriférantes et/ou de terpènes,
b) des esters d'alcools terpéniques, et/ou d'alcools de substances odoriférantes comportant des polymères et
c) des polymères qui sont obtenus par réaction d'alcools terpéniques et/ou d'alcools de substances odoriférantes avec des monomères ou des polymères qui portent des groupes isocyanate.

22. Milieux filtrants, matériaux de construction, matériaux de construction auxiliaires, textiles, fourrures, papier, peaux ou cuirs pourvus d'un agent selon la revendication 21.

23. Agent de lavage et/ou de nettoyage selon la revendication 21, contenant 0,000001 à 5% en poids de substances qui libèrent des terpènes et/ou des alcools de substances odoriférantes pour inhiber la reproduction asexuée de champignons, **caractérisée en ce que** les substances, qui libèrent des terpènes et/ou des alcools de substances odoriférantes, sont choisies dans le groupe constitué par
a) des esters d'acide silicique d'alcools de substances odoriférantes et/ou de terpènes,
b) des esters d'alcools terpéniques et/ou d'alcools de substances odoriférantes comportant des polymères,
c) des polymères qui sont obtenus par réaction d'alcools terpéniques et/ou d'alcools de substances odoriférantes avec des monomères ou des polymères qui portent des groupes isocyanate.

24. Agent de lavage et/ou de nettoyage selon la revendication 23, **caractérisé en ce qu'**il s'agit d'un agent de lavage liquide ou solide.

25. Agent de lavage et/ou de nettoyage selon la revendication 24, **caractérisé en ce qu'**il s'agit d'un agent de nettoyage de surfaces dures.

26. Adhésif contenant 0,000001 à 5% en poids de substances qui libèrent des terpènes et/ou des alcools de substances odoriférantes pour inhiber la reproduction asexuée de champignons, **caractérisé en ce que** les substances, qui libèrent des terpènes et/ou des alcools de substances odoriférantes, sont choisies dans le groupe constitué :
a) des esters d'acide silicique d'alcools de substances odoriférantes et/ou de terpènes,
b) des esters d'alcools terpéniques, et/ou d'alcools de substances odoriférantes comportant des polymères,
c) des polymères qui sont obtenus par réaction d'alcools terpéniques et/ou d'alcools de substances odoriférantes avec des monomères ou des polymères qui portent des groupes isocyanate ou
d) des calixarènes qui sont chargés de terpènes et/ou d'alcools de substances odoriférantes.

27. Adhésif selon la revendication 26, **caractérisé en ce qu'**il s'agit d'un adhésif à base d'eau.

28. Adhésif selon la revendication 26 ou 27, **caractérisé en ce qu'**il s'agit d'un adhésif destiné à fixer des papiers peints et des matières de revêtement mural similaires.

29. Matière d'étanchéité contenant des substances qui libèrent des terpènes et/ou des alcools de substances odoriférantes pour inhiber la reproduction asexuée de champignons, **caractérisée en ce que** les substances, qui libèrent des terpènes et/ou des alcools de substances odoriférantes, sont choisies dans le groupe constitué :
a) des esters d'acide silicique d'alcools de substances odoriférantes et/ou de terpènes,
b) des esters d'alcools terpéniques, et/ou d'alcools de substances odoriférantes comportant des polymères,
c) des polymères qui sont obtenus par réaction d'alcools terpéniques et/ou d'alcools de substances odoriférantes avec des monomères ou des polymères qui portent des groupes isocyanate ou
d) des calixarènes qui sont chargés de terpènes et/ou d'alcools de substances odoriférantes.

30. Matière d'étanchéité selon la revendication 29, **caractérisée en ce qu'**il s'agit d'un matière d'étanchéité pour joint.
